# EUROPÄISCHE PATENTSCHRIFT

(11) **EP 2 918 972 B1**
(45) Veröffentlichungstag und Bekanntmachung des Hinweises auf die Patenterteilung: **09.10.2019**
(21) Anmeldenummer: 14159774.0
(22) Anmeldetag: 14.03.2014
(51) Int. Cl.: G01C 11/02, G01C 3/08

(54) **Verfahren und handhaltbares Entfernungsmessgerät zum Erzeugen eines Raummodells**
Method and handheld distance measuring device for generating a spatial model
Procédé et appareil de mesure d'éloignement portatif pour la génération d'un modèle spatial

(43) Veröffentlichungstag der Anmeldung: 16.09.2015
(73) Patentinhaber: Leica Geosystems AG, 9435 Heerbrugg (CH)
(72) Erfinder: Giger, Kurt, 9464 Rüthi (CH)
(74) Vertreter: Kaminski Harmann

(56) Entgegenhaltungen:
- DE-A1-102006 054 324
- DE-A1-102008 054 453
- DE-A1-102010 038 507
- DE-A1-102010 042 733
- US-A1- 2010 246 892
- US-A1- 2013 228 620
- US-A1- 2013 314 688
- TheCADGorilla: "AutoCAD Tutorial - Measuring Tools", , 20. Oktober 2010 (2010-10-20), XP054976014, Gefunden im Internet: URL:https://www.youtube.com/watch?v=YcfnSj 0_ke4 [gefunden am 2015-07-08]

## Beschreibung

Die vorliegende Erfindung betrifft ein Verfahren und ein handhaltbares Entfernungsmessgerät mit einer Distanzmesseinheit und mindestens einer Kamera zum Erzeugen eines Raummodells einer Umgebung. Anhand des Raummodells können Entfernungen zwischen Raumpunkten in der Umgebung ermittelt werden, ohne diese direkt messen zu müssen.

Die Erfindung betrifft ausserdem ein Verfahren zum indirekten Ermitteln einer Distanz zwischen zwei Zielpunkten mittels eines handhaltbaren Entfernungsmessgerätes, wobei eine aktuelle Pose des Entfernungsmessgerätes während einer Entfernungsmessung mittels Photogrammetrie ermittelbar ist.

In vielen Anwendungen werden Verfahren und Systeme zur Entfernungsmessung verwendet. Beispiele hierfür sind ausgesprochen präzise Vermessungen in geodätischen Applikationen, aber auch Messaufgaben im Bereich der Bauinstallation oder für industrielle Prozesssteuerungen.

Für diese Aufgaben werden stationäre, bewegbare oder auch handhaltbare Entfernungsmessgeräte eingesetzt, welche eine optische Entfernungsmessung zu einem ausgewählten Zielpunkt ausführen. Zumeist wird hierbei ein Laserstrahl emittiert und nach Reflektion am Ziel wieder empfangen und ausgewertet. Zur Bestimmung der Entfernung stehen dabei verschiedene Messprinzipien zur Verfügung, wie z. B. Phasen- oder Laufzeitmessung.

Insbesondere im Bereich der Bauinstallation oder Bauabnahme werden tragbare und in der Hand zu haltende Geräte verwendet, welche bezüglich einer zu vermessenden Struktur angelegt werden und dann eine Entfernungsmessung zu einer Oberfläche durchführen. Ein für solche Anwendungen geeignetes und typisches handhaltbares Entfernungsmessgerät wird beispielsweise in der EP 0 738 899 und der EP 0 701 702 beschrieben.

Da für die meisten Anwendungen ein auf der anzumessenden Oberfläche sichtbarer Zielpunkt vorteilhaft ist, werden zumeist rote Laser als Strahlungsquellen für die Entfernungsmessung verwendet. Mit Entfernungsmessern des Stands der Technik sind so bei grosser Handhabungsfreundlichkeit Genauigkeiten bis in den Millimeterbereich erzielbar. Mit derzeit erhältlichen handhaltbaren Entfernungsmessgeräten können Messungen von einem Punkt zu einem anderen Punkt durchgeführt werden, zu dem eine Sichtverbindung besteht. Wenn das Ziel verdeckt ist, können mittels eines Neigungssensors auch Horizontalmasse ermittelt werden.

Im Stand der Technik sind verschiedene Lösungen mit handhaltbaren Entfernungsmessgeräten mit Laserentfernungsmessern beschrieben, mittels derer Entfernungen indirekt gemessen werden können.

So offenbart die EP 2 698 602 A1 ein handhaltbares Entfernungsmessgerät mit einer Distanzmesseinheit und einer Winkelbestimmungseinheit zur Bestimmung von Raumwinkeln in Relation zu einem Referenzkoordinatensystem. Mittels dieses Raumwinkels und zweier direkt gemessener Distanzen kann die Distanz zwischen zwei entfernten Punkten indirekt ermittelt werden. Zum Verwenden der Winkelbestimmungseinheit muss das Entfernungsmessgerät über eine Referenzierungsstütze während des gesamten Messverfahrens an einem festen Referenzkörper angelegt bleiben.

Komfortabler für den Benutzer sind Verfahren, bei denen das Entfernungsmessgerät frei in der Hand haltbar ist: In der EP 1 517 117 A1 wird ein Verfahren zur Bestimmung einer aktuellen Position eines Entfernungsmessgerätes geoffenbart. Dabei tastet ein Laserscanner des Entfernungsmessgerätes ein Raumsegment ab und erfasst dort eine Vielzahl zuvor angebrachter punktförmiger Referenzierungsmittel anhand derer eine aktuelle Position des Entfernungsmessgerätes ermittelbar ist. Nachteilig ist hier andererseits die Notwendigkeit, die Messumgebung durch Verteilen der erfassbaren Referenzierungsmittel in derselben für das Messverfahren zeitaufwendig vorzubereiten.

Die DE 10 2006 054 324 A1, die DE 10 2010 038 507 A1 und die DE 10 2008 054 453 A1 offenbaren verschiedene Verfahren zur bildbasierten Vermessung mittels eines handgehaltenen Entfernungsmessgerätes. Das "AutoCAD Tutorial - Measuring Tools" von "TheCADGorilla" (abrufbar im Internet unter https://www.youtube.com/watch?v=YcfnSj0_ke4) zeigt beispielhaft eine graphische Benutzeroberfläche zum Bearbeiten von CAD-Daten.

Die EP 2 669 707 A1 offenbart ein weiteres Verfahren zur indirekten Bestimmung von Distanzen mit einem handhaltbaren Entfernungsmessgerät, wobei hier die Distanzen mittels eines von einer Kamera des Entfernungsmessgerätes aufgenommenen Panoramabildes ermittelt werden. Zur Ausführung dieses Verfahrens werden gleichzeitig zu einer Vermessung der Entfernung zu zwei Raumpunkten von einer Bilderfassungseinheit Bilder von der Umgebung der Raumpunkte aufgenommen, die beispielsweise mittels Image-Stitching zu einem einzigen Panoramabild zusammengefügt werden, sodass aus den miteinander verknüpften Bildern eine Anzahl von Pixeln zwischen den beiden Raumpunkten ermittelbar ist. Aus dieser Anzahl von Pixeln kann ein Winkel ermittelt werden. Die gesuchte Entfernung zwischen den beiden Raumpunkten kann mit dem Kosinussatz errechnet werden. Ein handhaltbares Entfernungsmessgerät gemäss der EP 2 669 707 A1 beinhaltet zu diesem Zweck eine Bilderfassungseinheit mit mindestens einer Kamera und eine Bildauswerteeinheit zum Zusammenfügen der Bilder und zum Ermitteln der Pixelanzahl. Dieses Verfahren ist allerdings im wesentlichen nur auf Distanzen zwischen Punkten auf derselben Ebene, z. B. auf derselben Wand, anwendbar.

Es ist daher eine Aufgabe der vorliegenden Erfindung, ein Verfahren bereitzustellen, das ein indirektes Ermitteln von Entfernungen zwischen Punkten in einem Raum ermöglicht.

Eine besondere Aufgabe ist es, ein solches Verfahren bereitzustellen, wobei zwischen den Zielpunkten kein Sichtkontakt besteht, insbesondere wobei die Zielpunkte auch von keinem Messpunkt aus gleichzeitig sichtbar sein müssen.

Insbesondere ist es eine Aufgabe der Erfindung, ein solches Verfahren bereitzustellen, bei dem das Entfernungsmessgerät während des gesamten Verfahrens von einem Benutzer frei beweglich in der Hand gehalten werden kann.

Weiterhin ist es eine Aufgabe der Erfindung, ein solches Verfahren bereitzustellen, das ohne Vorbereitungen der Messumgebung - insbesondere ohne ein Anbringen von erfassbaren Referenzierungsmitteln - anwendbar und somit schneller ausführbar ist.

Eine zusätzliche Aufgabe ist es, einer Vielzahl von Benutzern die Entfernungsermittlung aus der Ferne zu ermöglichen.

Eine weitere Aufgabe der vorliegenden Erfindung ist die Bereitstellung eines handhaltbaren Entfernungsmessgerätes zur Ausführung eines solchen Verfahrens.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Ein erfindungsgemässes handhaltbares Entfernungsmessgerät mit einem Laserentfernungsmesser zur Messung von Entfernungen zu Zielpunkten in einer Umgebung, einer Auswertekomponente zur Ableitung und Bereitstellung der gemessenen Entfernungen und einer Bilderfassungseinheit mit mindestens einer Kamera zur Erfassung von Bildern der Umgebung und einer Anzeigevorrichtung, ist gekennzeichnet durch eine Steuerungseinheit mit Programmcode zur Steuerung einer Raummodellierungsfunktionalität des Entfernungsmessgerätes, die zur Verwendung mit einer Messsequenz ausgebildet ist, im Rahmen welcher von unterschiedlichen Positionen des Entfernungsmessgerätes aus ein erstes Bild und ein zweites Bild eines Bereiches der Umgebung erfasst werden, die einen gemeinsamen Bildbereich aufweisen, wobei die Bilderfassungseinheit beim Erfassen des ersten Bildes und des zweiten Bildes unterschiedliche Posen einnimmt, die die jeweilige Position und Ausrichtung des Entfernungsmessgerätes repräsentieren.

Die Bilderfassungseinheit weist mindestens eine erste Kamera und eine zweite Kamera auf und ist dazu ausgestaltet, Bilder in Richtung der Emissionsrichtung des Laserentfernungsmessers zu erfassen und mit der ersten Kamera und der zweiten Kamera gleichzeitig Bilder zu erfassen.

Im Rahmen der Raummodellierungsfunktionalität wird in Reaktion auf einen ersten Benutzerbefehl von einer ersten Position des Entfernungsmessgerätes aus durch die Bilderfassungseinheit ein erstes Bild eines ersten Bereiches der Umgebung erfasst, und durch den Laserentfernungsmesser in zeitlichem Zusammenhang, insbesondere zeitgleich, mit dem Erfassen des ersten Bildes eine erste Entfernung zu einem ersten Zielpunkt in dem ersten Bereich gemessen. In Reaktion auf einen zweiten Benutzerbefehl wird von einer zweiten Position des Entfernungsmessgerätes aus durch die Bilderfassungseinheit ein zweites Bild des ersten Bereiches der Umgebung erfasst wird, und durch den Laserentfernungsmesser in zeitlichem Zusammenhang, insbesondere zeitgleich, mit dem Erfassen des zweiten Bildes eine zweite Entfernung zu dem ersten Zielpunkt oder zu einem zweiten Zielpunkt in unmittelbarer Umgebung des ersten Zielpunktes gemessen.

Dabei sind das erste Bild und das zweite Bild jeweils aus Einzelbildern mindestens der ersten Kamera und der zweiten Kamera zusammengesetzte Weitwinkelbilder.

Die Steuerungseinheit ist weiterhin dazu ausgestaltet, im Rahmen der Raummodellierungsfunktionalität in den Bildern Merkmale der Umgebung zu identifizieren, die in dem gemeinsamen Bildbereich abgebildet sind, basierend auf den identifizierten Merkmalen, der ersten Entfernung und der zweiten Entfernung eine räumliche Beziehung zwischen den Posen zu ermitteln, insbesondere inklusive einer Stereobasis, und basierend auf dem ersten Bild, dem zweiten Bild und der räumlichen Beziehung mittels Stereophotogrammetrie ein Raummodell der Umgebung zu erstellen, wobei Entfernungen zwischen Raumpunkten in der Umgebung anhand des Raummodells ermittelbar sind.

Das Entfernungsmessgerät weist eine Anzeigevorrichtung zum Anzeigen des Raummodells und von Raumpunkten, und eine Eingabevorrichtung zur Auswahl von Raumpunkten in dem Raummodell durch einen Benutzer auf, wobei die Steuerungseinheit dazu ausgestaltet ist, eine Entfernung zwischen den ausgewählten Raumpunkten zu ermitteln und die Anzeigevorrichtung dazu ausgestaltet ist, diese Entfernung anzuzeigen, insbesondere wobei die Anzeigevorrichtung und die Eingabevorrichtung als ein Touchscreen ausgestaltet sind.

In einer Ausführungsform des erfindungsgemässen handhaltbaren Entfernungsmessgerätes weist die Bilderfassungseinheit eine Vielzahl von Kameras auf, wobei der von den Bildern erfasste Winkelbereich mindestens 120° umfasst, insbesondere mindestens 150° oder mindestens 180°.

Die Kameras der Bilderfassungseinheit sind vorzugsweise in Form einer Halbsphäre angeordnet, als Wafer-Level-Cameras ausgeführt und/oder mit rückwärtiger Belichtung.

Das erstellte Raummodell weist in einer Ausführungsform eine Vielzahl mittels Merkmalsextraktion gewonnener Raumkoordinaten auf, insbesondere eine Punktwolke, sowie Bilddaten der von der Bilderfassungseinheit aufgenommenen Bilder.

In einer Ausführungsform des Entfernungsmessgerätes ist die Steuerungseinheit dazu ausgestaltet, im Rahmen der Raummodellierungsfunktionalität ein erstes Teil-Raummodell und ein zweites Teil-Raummodell, die einen gemeinsamen Überschnitt haben, zu einem Gesamt-Raummodell zusammenzufügen, wobei Entfernungen zwischen Raumpunkten beider Bereiche der Umgebung anhand des Raummodells ermittelbar sind.

In einer besonderen Ausführungsform des erfindungsgemässen handhaltbaren Entfernungsmessgerätes ist die mindestens eine Kamera der Bilderfassungseinheit zur Aufnahme von Hochkontrastbildern ausgestaltet, und die Steuerungseinheit dazu ausgestaltet, im Rahmen der Raummodellierungsfunktionalität Merkmale in den Hochkontrastbildern zu identifizieren.

Eine weitere Ausführungsform des Entfernungsmessgerätes weist Mittel zur kabellosen Datenübertragung auf. Dabei ist das Raummodell mittels der kabellosen Datenübertragung von dem Entfernungsmessgerät an mindestens ein externes Gerät übermittelbar, und/oder mittels der kabellosen Datenübertragung sind Daten von dem Entfernungsmessgerät an mindestens ein externes Gerät übermittelbar, wobei die Daten insbesondere mindestens Koordinaten von Raumpunkten und/oder Bild- und Entfernungsdaten aufweisen, und das Raummodell basierend auf den Daten durch eine Recheneinheit des externen Gerätes erstellbar ist.

Eine Ausführungsform des Entfernungsmessgerätes ist gekennzeichnet durch eine Vielzahl von Laserentfernungsmessern zum Messen von Entfernungen zu einer Vielzahl von Punkten in dem ersten Bereich, wobei die Steuerungseinheit dazu ausgestaltet ist, die Entfernungen zu der Vielzahl von Punkten zum Ermitteln der räumlichen Beziehung heranzuziehen. Die verschiedenen gleichzeitigen Entfernungsmessungen können insbesondere mittels divergent, insbesondere orthogonal, ausgesendeter Laserstrahlen erfolgen.

Eine weitere Ausführungsform des Entfernungsmessgerätes ist gekennzeichnet durch einen Beschleunigungs- und/oder Lagesensor, insbesondere aufweisend ein Gyroskop, einen Neigungssensor oder einen Kompass, zum Bereitstellen von Beschleunigungs- bzw. Lagedaten des Entfernungsmessgerätes, wobei die Steuerungseinheit dazu ausgestaltet ist, die Beschleunigungs- bzw. Lagedaten zum Ermitteln der räumlichen Beziehung heranzuziehen.

In einer weiteren Ausführungsform des erfindungsgemässen handhaltbaren Entfernungsmessgerätes ist die mindestens eine Kamera der Bilderfassungseinheit mit einem Schwarz-Weiss-Bildsensor ausgestattet. Unter einem Schwarz-Weiss-Bildsensor ist ein Sensor zu verstehen, der für die Erfassung monochromer Bilder ausgelegt ist. Ein solcher Sensor benötigt keine Farbfilter und vermeidet dadurch Berechnungsfehler sowie Informationsverluste im resultierenden Bild. Insbesondere bei schwachen Lichtverhältnissen hat dies den Vorteil, dass durch den höheren Lichteinfall kürzere Belichtungszeiten möglich sind und damit kontrastreichere Bilder erzielt werden. In Folge dessen kann das 3D-RaumModell genauer erzeugt und damit in der anschliessenden Distanzmessung eine höhere Genauigkeit erreicht werden. Zum Verzicht auf einen Anti-Aliasing-Filter kann zusätzlich oder alternativ auch ein Sensor mit einer stochastischen oder zumindest vom Bayer-Muster abweichenden Pixelverteilung gewählt werden.

Ein Verfahren zum Erzeugen eines Raummodells einer Umgebung mittels eines handhaltbaren Entfernungsmessgerätes, das einen Laserentfernungsmesser und eine Bilderfassungseinheit aufweist, umfasst erfindungsgemäss eine Messsequenz aufweisend
- ein Erfassen eines ersten Bildes eines ersten Bereiches der Umgebung durch die Bilderfassungseinheit von einer ersten Position des Entfernungsmessgerätes aus,
- in zeitlichem Zusammenhang, insbesondere zeitgleich, mit dem Erfassen des ersten Bildes ein Messen einer ersten Entfernung zu einem ersten Zielpunkt in dem ersten Bereich der Umgebung durch den Laserentfernungsmesser,
- ein Erfassen eines zweiten Bildes des ersten Bereiches der Umgebung durch die Bilderfassungseinheit von einer von der ersten Position des Entfernungsmessgerätes abweichenden zweiten Position aus, und
- in zeitlichem Zusammenhang, insbesondere zeitgleich, mit dem Erfassen des zweiten Bildes ein Messen einer zweiten Entfernung zu dem ersten Zielpunkt oder zu einem anderen Zielpunkt in unmittelbarer Umgebung des ersten Zielpunktes,
   wobei das erste Bild und das zweite Bild jeweils aus Einzelbildern mindestens der ersten Kamera und der zweiten Kamera zusammengesetzte Weitwinkelbilder sind und einen gemeinsamen Bildbereich aufweisen, und die Bilderfassungseinheit beim Erfassen des ersten Bildes und des zweiten Bildes unterschiedliche Posen einnimmt, die die jeweilige Position und Ausrichtung des Entfernungsmessgerätes repräsentieren. Zusätzlich werden im Rahmen des erfindungsgemässen Verfahrens
- in den Bildern Merkmale der Umgebung identifiziert, insbesondere extrahiert, die in dem gemeinsamen Bildbereich abgebildet sind,
- basierend auf den identifizierten Merkmalen, der ersten Entfernung und der zweiten Entfernung eine räumliche Beziehung zwischen den Posen ermittelt, insbesondere inklusive einer Stereobasis,
- basierend auf dem ersten Bild, dem zweiten Bild und der räumlichen Beziehung mittels Stereophotogrammetrie ein Raummodell der Umgebung erstellt, wobei Entfernungen zwischen Raumpunkten der Umgebung anhand des Raummodells ermittelbar sind,
- das Raummodell auf einer Anzeigevorrichtung des Entfernungsmessgerätes angezeigt, und
- eine Entfernung zwischen zwei mittels einer Eingabevorrichtung durch einen Benutzer ausgewählten Raumpunkten von einer Steuerungseinheit des Entfernungsmessgerätes ermittelt und auf der Anzeigevorrichtung angezeigt, insbesondere wobei das Entfernungsmessgerät einen Touchscreen aufweist, der die Anzeigevorrichtung und die Eingabevorrichtung umfasst.

In einer Ausführungsform des Verfahrens ist das erstellte Raummodell ein erstes Teil-Raummodell, und die Messsequenz weist zusätzlich auf
- ein Erfassen eines dritten Bildes eines zweiten Bereiches der Umgebung durch die Bilderfassungseinheit von einer dritten Position des Entfernungsmessgerätes aus,
- in zeitlichem Zusammenhang, insbesondere zeitgleich, mit dem Erfassen des dritten Bildes ein Messen einer dritten Entfernung zu einem zweiten Zielpunkt in dem zweiten Bereich der Umgebung durch den Laserentfernungsmesser,
- ein Erfassen eines vierten Bildes des zweiten Bereiches der Umgebung durch die Bilderfassungseinheit von einer von der dritten Position des Entfernungsmessgerätes abweichenden vierten Position aus, und
- in zeitlichem Zusammenhang, insbesondere zeitgleich, mit dem Erfassen des vierten Bildes ein Messen einer vierten Entfernung zu dem zweiten Zielpunkt oder zu einem anderen Zielpunkt in unmittelbarer Umgebung des zweiten Zielpunktes,
   wobei das dritte Bild und das vierte Bild einen gemeinsamen Bildbereich aufweisen, und die Bilderfassungseinheit beim Erfassen des dritten Bildes und des vierten Bildes unterschiedliche Posen einnimmt, die die jeweilige Position und Ausrichtung des Entfernungsmessgerätes repräsentieren. Zusätzlich werden im Rahmen dieser Ausführungsform des Verfahrens
- Merkmale in der Umgebung identifiziert, die in dem gemeinsamen Bildbereich abgebildet sind,
- basierend auf den identifizierten Merkmalen, der dritten Entfernung und der vierten Entfernung eine räumliche Beziehung zwischen den Posen ermittelt, insbesondere eine Stereobasis,
- basierend auf dem dritten Bild, dem vierten Bild und der räumlichen Beziehung ein zweites Teil-Raummodell der Umgebung erstellt, und
- ein Gesamt-Raummodell aus dem ersten Teil-Raummodell und dem zweiten Teil-Raummodell, die einen gemeinsamen Überschnitt haben, zusammengesetzt, wobei Entfernungen zwischen Raumpunkten beider Bereiche der Umgebung anhand des Raummodells ermittelbar sind.

In einer Ausführungsform weist das Raummodell eine Vielzahl mittels Merkmalsextraktion gewonnener Raumkoordinaten auf, insbesondere eine Punktwolke, sowie Bilddaten der von Bilderfassungseinheit aufgenommenen Bilder.

In einer weiteren Ausführungsform des erfindungsgemässen Verfahrens wird zum Identifizieren zusätzlicher Raumpunkte in der Umgebung mindestens ein zusätzliches Bild erfasst, insbesondere mit einem Messen mindestens einer zusätzlichen Entfernung, wobei das zusätzliche Bild jeweils einen gemeinsamen Bildbereich mit dem ersten oder zweiten Bild aufweist, insbesondere wobei das Raummodell auch auf dem zusätzlichen Bild basierend erstellt wird, oder basierend auf dem zusätzlichen Bild ergänzt wird.

Eine weitere Ausführungsform des Verfahrens ist dadurch gekennzeichnet, dass das Entfernungsmessgerät über Mittel zur kabellosen Datenübertragung verfügt, und das Raummodell mittels der kabellosen Datenübertragung von dem Entfernungsmessgerät an mindestens ein externes Gerät übermittelt wird, oder basierend auf mittels der kabellosen Datenübertragung von dem Entfernungsmessgerät an ein externes Gerät übermittelten Daten erstellt wird, insbesondere wobei das Raummodell auf dem externen Gerät angezeigt wird und eine Entfernung zwischen zwei durch einen Benutzer ausgewählten Referenzpunkten von einer Recheneinheit des externen Gerätes ermittelt und auf diesem angezeigt wird.

In einer weiteren Ausführungsform des Verfahrens werden zum Ermitteln der räumlichen Beziehung Entfernungen zu einer Vielzahl von Punkten in dem ersten Bereich, die durch eine Vielzahl von Laserentfernungsmessern des Entfernungsmessgerätes gemessen werden, herangezogen.

In einer weiteren Ausführungsform des Verfahrens werden zum Ermitteln der räumlichen Beziehung Beschleunigungs- bzw. Lagedaten, die durch einen Beschleunigungs- und/oder Lagesensor des Entfernungsmessgerätes bereitgestellt werden, herangezogen, insbesondere wobei der Beschleunigungs- und/oder Lagesensor ein Gyroskop, einen Neigungssensor oder einen Kompass umfasst.

Ein erfindungsgemässes Computerprogrammprodukt mit Programmcode, der auf einem maschinenlesbaren Träger gespeichert ist, insbesondere auf einer als Steuerungseinheit des erfindungsgemässen Entfernungsmessgeräts ausgebildeten elektronischen Datenverarbeitungseinheit, zur Ausführung mindestens der folgenden Schritte des erfindungsgemässen Verfahrens:
- Identifizieren von Merkmalen in der Umgebung, die in dem gemeinsamen Bildbereich abgebildet sind,
- Ermitteln einer räumliche Beziehung zwischen den Posen, insbesondere einer Stereobasis, basierend auf den identifizierten Merkmalen, der ersten Entfernung und der zweiten Entfernung,
- Erstellen eines Raummodells der Umgebung, basierend auf dem ersten Bild, dem zweiten Bild und der räumlichen Beziehung,
- Anzeigen des Raummodells auf einer Anzeigevorrichtung des Entfernungsmessgerätes,
- Ermitteln einer Entfernung zwischen zwei mittels einer Eingabevorrichtung durch einen Benutzer ausgewählten Raumpunkten, und
- Anzeigen der Entfernung auf der Anzeigevorrichtung.

Ein weiterer Aspekt der Erfindung bezieht sich auf ein Verfahren zum indirekten Ermitteln einer Distanz zwischen zwei Zielpunkten.

Ein Verfahren zum Ermitteln einer Distanz zwischen einem ersten Zielpunkt und einem zweiten Zielpunkt mittels eines handhaltbaren Entfernungsmessgerätes, das einen Laserentfernungsmesser und eine Bilderfassungseinheit mit mindestens einer Kamera aufweist, beinhaltet eine Messsequenz mit
- einem Messen einer ersten Entfernung zu dem ersten Zielpunkt von einer ersten Position des Entfernungsmessgerätes aus mittels eines Aussendens eines Laserstrahls von dem Laserentfernungsmesser in einer ersten Emissionsrichtung,
- einem Messen einer zweiten Entfernung zu dem zweiten Zielpunkt von einer zweiten Position des Entfernungsmessgerätes aus mittels eines Aussendens eines Laserstrahls von dem Laserentfernungsmesser in einer zweiten Emissionsrichtung, und
- einem Erfassen einer Serie von Bildern, die mindestens ein erstes Zielbild und ein zweites Zielbild sowie gegebenenfalls Überbrückungsbilder aufweist, durch mindestens eine Kamera des Entfernungsmessgerätes.

Dabei wird das erste Zielbild in zeitlichem Zusammenhang, insbesondere zeitgleich, mit dem Messen der ersten Entfernung erfasst, und das zweite Zielbild in zeitlichem Zusammenhang, insbesondere zeitgleich, mit dem Messen der zweiten Entfernung erfasst, jeweils aufeinanderfolgende Bilder der Serie weisen einen gemeinsamen Bildbereich auf, und die mindestens eine Kamera nimmt beim Erfassen der Bilder unterschiedliche Posen ein, die die Position und Ausrichtung des Entfernungsmessgerätes repräsentieren.

Gemäss diesem Aspekt der Erfindung wird für jedes der erfassten Bilder die jeweilige Pose des Entfernungsmessgerätes ermittelt, eine räumliche Beziehung zwischen einer während des Messens der ersten Entfernung eingenommenen ersten Zielpose und einer während des Messens der zweiten Entfernung eingenommenen zweiten Zielpose ermittelt, und die Distanz zwischen dem ersten Zielpunkt und dem zweiten Zielpunkt mit Hilfe der räumlichen Beziehung ermittelt.

In einer Ausführungsform des erfindungsgemässen Verfahrens wird die räumliche Beziehung zwischen der ersten Zielpose und der zweiten Zielpose zumindest in drei translatorischen Freiheitsgraden und zwei rotatorischen Freiheitsgraden ermittelt.

In einer weiteren Ausführungsform des erfindungsgemässen Verfahrens umfasst die räumliche Beziehung einen Versatz zwischen der ersten Position und der zweiten Position des Entfernungsmessgerätes und einen Raumwinkel zwischen der ersten Emissionsrichtung und der zweiten Emissionsrichtung.

Insbesondere wird die Distanz zwischen dem ersten Zielpunkt und dem zweiten Zielpunkt aus der ersten Entfernung, der zweiten Entfernung, dem Abstand zwischen der ersten Position und der zweiten Position, der Richtung des Abstandes und dem Raumwinkel ermittelt.

In einer weiteren Ausführungsform des erfindungsgemässen Verfahrens werden basierend auf der Serie von Bildern Referenzpunkte in der Umgebung identifiziert, die in mindestens einem gemeinsamen Bildbereich abgebildet werden, und die Posen basierend auf den identifizierten Referenzpunkten mittels Rückwärtsschnitt ermittelt.

In einer besonderen Ausführungsform dieses Verfahrens werden die identifizierten Referenzpunkte zum Ausführen weiterer Messsequenzen in derselben Umgebung gespeichert, insbesondere in einer Punktwolke.

In einer weiteren Ausführungsform des erfindungsgemässen Verfahrens wird mindestens ein Überbrückungsbild aufgenommen, wobei in zeitlichem Zusammenhang, insbesondere zeitgleich, mit der Aufnahme von Überbrückungsbildern der Serie von Bildern jeweils eine Skalierentfernung durch den Laserentfernungsmesser gemessen wird, und die gemessenen Skalierentfernungen zum Ermitteln der jeweiligen Zwischenposen herangezogen werden, insbesondere zum Skalieren einer Position des Entfernungsmessgerätes.

Eine weitere Ausführungsform des erfindungsgemässen Verfahrens beinhaltet das Heranziehen von durch einen Beschleunigungs- und/oder Lagesensor des Entfernungsmessgerätes bereitgestellten Beschleunigungs- bzw. Lagedaten zum Ermitteln der Posen, insbesondere wobei der Beschleunigungs- und/oder Lagesensor ein Gyroskop, einen Neigungssensor oder einen Kompass umfasst.

Ein erfindungsgemässes handhaltbares Entfernungsmessgerät weist einen Laserentfernungsmesser zur Messung von Entfernungen zu Zielpunkten mittels eines in einer Emissionsrichtung ausgesendeten Laserstrahls, eine Auswertekomponente zur Ableitung und Bereitstellung der gemessenen Entfernungen, eine Bilderfassungseinheit mit mindestens einer Kamera zur Erfassung von Bildern einer Umgebung, und eine Steuerungseinheit mit Programmcode zur Steuerung einer Bilderfassungs- und -auswertefunktionalität des Entfernungsmessgerätes auf. Im Rahmen der Bilderfassungs- und -auswertefunktionalität ist durch die Bilderfassungseinheit eine Serie von mindestens zwei Bildern erfassbar, die mindestens ein erstes Zielbild und ein zweites Zielbild sowie gegebenenfalls Überbrückungsbilder aufweist, und in der jeweils aufeinanderfolgende Bilder der Serie einen gemeinsamen Bildbereich aufweisen, wobei die Bilderfassungseinheit das erste Zielbild in zeitlichem Zusammenhang, insbesondere zeitgleich, mit dem Messen der ersten Entfernung und das zweite Zielbild in zeitlichem Zusammenhang, insbesondere zeitgleich, mit dem Messen der zweiten Entfernung erfasst, jeweils aufeinanderfolgende Bilder der Serie einen gemeinsamen Bildbereich aufweisen, und die Bilderfassungseinheit beim Erfassen der Bilder unterschiedliche Posen einnimmt, die die Position und Ausrichtung des Entfernungsmessgerätes repräsentieren.

Erfindungsgemäss ist im Rahmen der Bilderfassungs- und -auswertefunktionalität des Entfernungsmessgerätes mittels Photogrammetrie für jedes der erfassten Bilder die jeweilige Pose des Entfernungsmessgerätes ermittelbar, und eine räumliche Beziehung zwischen einer während des Messens der ersten Entfernung eingenommenen ersten Zielpose und einer während des Messens der zweiten Entfernung eingenommenen zweiten Zielpose ermittelbar, und die Auswertekomponente dazu ausgestaltet, die Distanz zwischen dem ersten Zielpunkt und dem zweiten Zielpunkt mit Hilfe der räumlichen Beziehung zu ermitteln.

In einer Ausführungsform des erfindungsgemässen Entfernungsmessgerätes ist die Bilderfassungs- und -auswertefunktionalität dazu ausgestaltet, basierend auf der Serie von Bildern mittels Vorwärtsschnitt Referenzpunkte in der Umgebung zu identifizieren, die in mindestens einem gemeinsamen Bildbereich abgebildet werden, und die Posen basierend auf den identifizierten Referenzpunkten mittels Rückwärtsschnitt zu ermitteln.

In einer weiteren Ausführungsform des erfindungsgemässen Entfernungsmessgerätes weist dieses eine Speichereinheit auf, die ausgestaltet ist zum Speichern identifizierter Referenzpunkte, insbesondere in Form einer Punktwolke.

Die Speichereinheit ist dabei insbesondere ausgestaltet zum Bereitstellen der gespeicherten Referenzpunkte
- für die Bilderfassungs- und -auswertefunktionalität, insbesondere wobei die Bilderfassungs- und -auswertefunktionalität dazu ausgestaltet ist, die Posen basierend auf gespeicherten Referenzpunkten zu ermitteln, und/oder
- für ein Display des Entfernungsmessgerätes zur Anzeige der Referenzpunkte, insbesondere als Teil eines Raummodells der Umgebung.

In einer weiteren Ausführungsform des erfindungsgemässen Entfernungsmessgerätes ist die Bilderfassungseinheit dazu ausgestaltet, im Rahmen der Bilderfassungs- und -auswertefunktionalität mindestens ein Überbrückungsbild aufzunehmen, wobei der Laserentfernungsmesser dazu ausgestaltet ist, in zeitlichem Zusammenhang, insbesondere zeitgleich, mit der Aufnahme von Überbrückungsbildern jeweils eine Skalierentfernung zu messen, und die Bilderfassungs- und -auswertefunktionalität dazu ausgestaltet ist, die jeweiligen Zwischenposen mit Hilfe der gemessenen Skalierentfernungen zu ermitteln, insbesondere wobei eine ermittelte Position des Entfernungsmessgerätes mittels der entsprechenden Skalierentfernung skalierbar ist.

Eine weitere Ausführungsform des erfindungsgemässen Entfernungsmessgerätes weist eine Bilderfassungseinheit mit mindestens zwei, insbesondere drei, Kameras auf, die dazu ausgestaltet ist, Bilder in Richtung einer Emissionsrichtung zu erfassen, Zielbilder als Weitwinkelbilder, insbesondere mit in einem Winkel von mindestens 120°, zu erfassen, und/oder mit mehreren Kameras gleichzeitig Bilder zu erfassen.

Eine weitere Ausführungsform des erfindungsgemässen Entfernungsmessgerätes weist einen Beschleunigungs- und/oder Lagesensor auf, insbesondere ein Gyroskop, einen Neigungssensor oder einen Kompass, zum Bereitstellen von aktuellen Beschleunigungs- und/oder Lagedaten des Entfernungsmessgerätes an die Bilderfassungs- und -auswertefunktionalität, wobei die Bilderfassungs- und -auswertefunktionalität dazu ausgestaltet ist, die Posen mit Hilfe der Beschleunigungs- bzw. Lagedaten zu ermitteln.

Eine weitere Ausführungsform des erfindungsgemässen Entfernungsmessgerätes weist auf:
- eine Zielsuch-Kamera mit einer Zoomfunktionalität,
- Eingabemittel, insbesondere ein Tastenfeld, zum Anwählen von Funktionen, und/oder
- ein, insbesondere berührungssensitives, Display zur Anzeige mittels der mindestens einen Kamera der Bilderfassungseinheit aufgenommener Bilder, eines Raummodells, insbesondere einer Punktwolke, gemessener Entfernungen, berechneter Distanzen und/oder eines von der Zielsuch-Kamera aufgenommenen Live-Bildes.

Die Erfindung umfasst ausserdem ein Computerprogrammprodukt mit Programmcode, der auf einem maschinenlesbaren Träger gespeichert ist, insbesondere auf einer als Steuerungseinheit eines erfindungsgemässen Entfernungsmessgeräts ausgebildeten elektronischen Datenverarbeitungseinheit, zur Ausführung mindestens der folgenden Schritte des erfindungsgemässen Verfahrens:
- Ermitteln der jeweiligen Pose des Entfernungsmessgerätes für jedes der erfassten Bilder,
- Ermitteln der räumlichen Beziehung zwischen der ersten Zielpose und der zweiten Zielpose und
- Ermitteln der Distanz zwischen dem ersten Zielpunkt und dem zweiten Zielpunkt mit Hilfe der räumlichen Beziehung.

Das erfindungsgemässe handhaltbare Entfernungsmessgerät und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein gattungsgemässes handhaltbares Entfernungsmessgerät mit einem Laserdistanzmesser;
- Fig. 2: ein erfindungsgemässes handhaltbares Entfernungsmessgerät in einer Längsschnittansicht;
- Fig. 3a-c: drei beispielhafte Ausführungsformen eines erfindungsgemässen handhaltbaren Entfernungsmessgerätes mit verschiedenen Kameraanordnungen;
- Fig. 4a-c: eine vierte beispielhaften Ausführungsform eines erfindungsgemässen handhaltbaren Entfernungsmessgerätes mit einer weiteren beispielhaften Kameraanordnung;
- Fig. 5a-c: eine fünfte beispielhaften Ausführungsform eines erfindungsgemässen handhaltbaren Entfernungsmessgerätes mit einer weiteren beispielhaften Kameraanordnung;
- Fig. 6a-b: eine zu ermittelnde räumliche Beziehung zwischen den Posen der Kameras eines handhaltbaren Entfernungsmessgerätes;
- Fig. 7a-c: Schritte einer ersten beispielhaften Ausführungsform des erfindungsgemässen Verfahrens zum Erstellen eines Raummodells;
- Fig. 8: ein Flussdiagramm zur Ausführungsform des Verfahrens nach Fig. 7a-c;
- Fig. 9a-b: zusätzliche Schritte einer weiteren beispielhaften Ausführungsform des erfindungsgemässen Verfahrens;
- Fig. 10: ein Flussdiagramm zur Ausführungsform des Verfahrens nach Fig. 9a-b;
- Fig. 11a-b: Raumpunkte in einer vermessenen Umgebung und Verfahrensschritte zum Erfassen zusätzlicher Raumpunkte in der vermessenen Umgebung;
- Fig. 12: ein Raummodell, angezeigt auf einer Anzeigeeinheit einer beispielhaften Ausführungsform eines erfindungsgemässen handhaltbaren Entfernungsmessgerätes und auf einem externen Gerät;
- Fig. 13: ein Flussdiagramm zur Ausführungsform eines Verfahrens zum indirekten Messen einer Entfernung; und
- Fig. 14a-f: Schritte einer beispielhaften Ausführungsform eines Verfahrens zum indirekten Messen einer Entfernung.

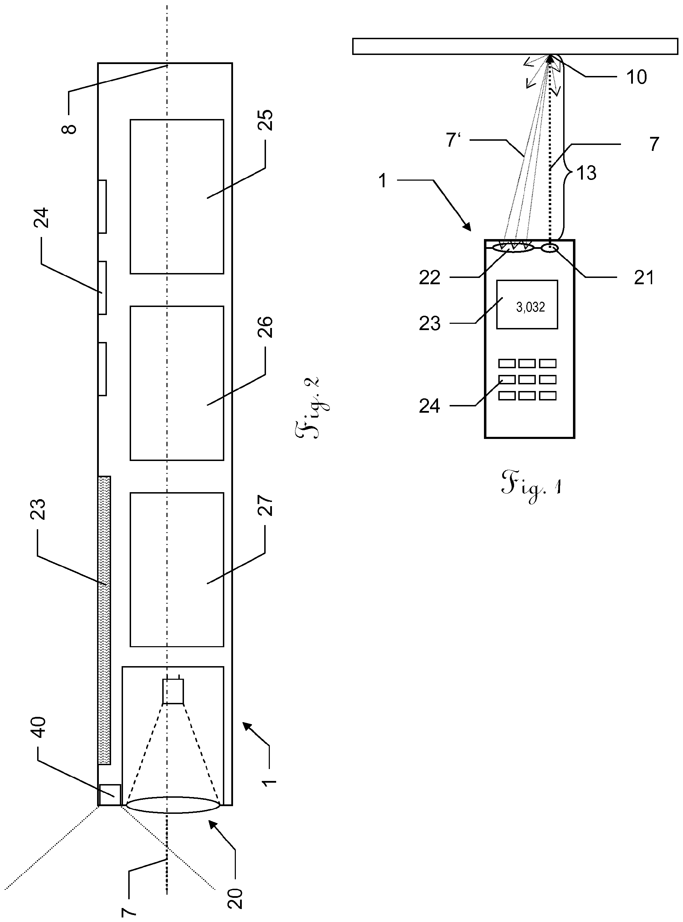

In Figur 1 ist ein gattungsgemässes handhaltbares Entfernungsmessgerät 1 zum Vermessen von Entfernungen in Aussenansicht dargestellt. Es weist ein Gehäuse auf, in dem die notwendigen elektronischen Komponenten angeordnet sind. Das Gehäuse ist dabei so ausgebildet, dass das Entfernungsmessgerät 1 in der Hand gehalten und auch an einem zu vermessenden Punkt definiert angelegt oder angeschlagen werden kann. Am Gehäuse können zu diesem Zweck entsprechende Anlagekanten oder ausklappbare oder aufsteckbare Anschlagelemente angebracht sein, wie sie beispielsweise in der WO 02/50564 beschrieben werden. Das Entfernungsmessgerät 1 beinhaltet an seiner Vorderseite einen Laserentfernungsmesser 20 mit einer Laseraussendeeinheit 21 und einer Laserempfangseinheit 22, die über optische Öffnungen im Gehäuse verfügen. Auf der Oberseite des Geräts befinden sich eine Anzeigevorrichtung 23 in Form eines Displays und Eingabemittel 24 in Form eines Tastenfeldes. Ausserdem kann eine - hier nicht dargestellte - Zielsuch-Kamera mit einer Zoomfunktionalität zur Aufnahme von auf der Anzeigevorrichtung 23 anzeigbaren Bildern in Richtung der Emissionsrichtung vorgesehen sein.

Erfindungsgemäss sendet die Laseraussendeeinheit 21 einen Laserstrahl 7 zu einem Zielpunkt 10 auf einer Wand aus. Diese weist eine natürlich rauhe Oberfläche auf, von der optische Strahlen streuend reflektiert werden. Ein Teil der gestreut reflektierten Strahlen 7' des Laserstrahls 7 wird von der Laserempfangseinheit 22 eingesammelt, detektiert und in ein elektrisches Signal umgewandelt. Das Signal wird in an sich bekannter Weise zum Bestimmen des digitalen Werts der Distanz 13 von einer elektronischen Schaltung ausgewertet. Zur Entfernungsermittlung kann z. B. Phasen- oder Laufzeitmessung eingesetzt werden. Dabei wird auch die Erstreckung zwischen der Laserempfangseinheit 22 und einem Messanschlag berücksichtigt. Der durch die Auswertung digital bestimmte Wert der gemessenen Entfernung 13 wird dann durch die Anzeigevorrichtung 23 einem Benutzer zur Verfügung gestellt.

Figur 2 stellt einen Längsschnitt durch eine beispielhafte Ausführungsform eines erfindungsgemässen handhaltbaren Entfernungsmessgerätes 1 dar. Das Entfernungsmessgerät 1 beinhaltet einen Laserentfernungsmesser 20 zur Messung von Entfernungen mittels eines in Emissionsrichtung 8 ausgesendeten Laserstrahls 7. Des Weiteren sind ein Display 23 und Eingabemittel 24 dargestellt.

Das handhaltbare Entfernungsmessgerätes 1 weist darüber hinaus eine Bilderfassungseinheit 40 mit mindestens einer Kamera zum Erfassen von Bildern der Umgebung auf.

Als interne Komponenten werden eine Auswertekomponente 25, ein Neigungs- und Beschleunigungssensor 26 und eine Steuerungseinheit 27 gezeigt. Die Steuerungseinheit 27 enthält Programmcode zur Ausführung einer Funktionalität zum Erstellen eines Raummodells anhand von gemessenen Entfernungen und erfassten Bildern der Umgebung. Ausserdem ist im Entfernungsmessgerät 1 eine (hier nicht dargestellte) Energiequelle enthalten, insbesondere eine Batterie oder ein Akku, die elektrische Energie für die elektrisch betriebenen Komponenten des Entfernungsmessgeräts 1 bereitstellt.

Ein digital vorliegender Entfernungswert kann - wie bei optisch gemessenen Distanzen heute üblich - von der Auswertekomponente 25 des Gerätes gespeichert, weiterverarbeitet oder übertragen und auf dem Display 23 einem Benutzer angezeigt werden.

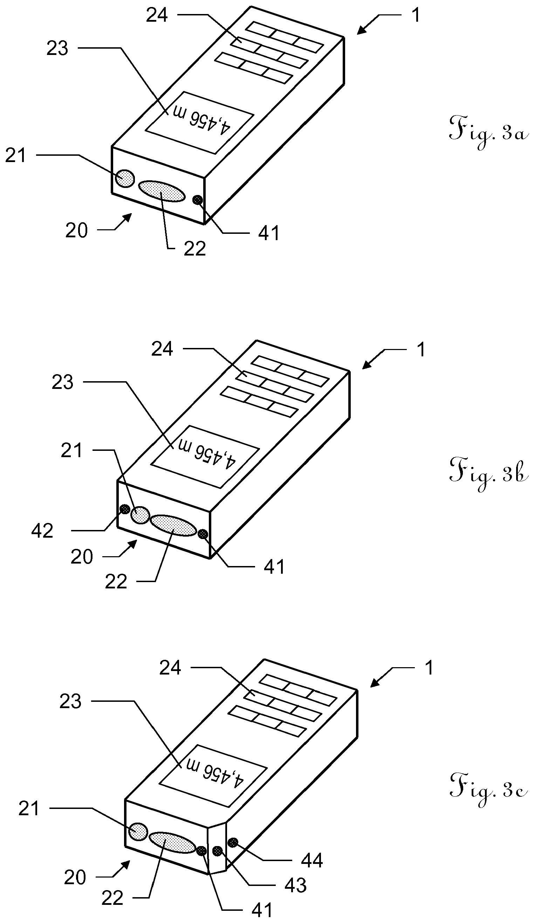

Figur 3a zeigt ein handhaltbares Entfernungsmessgerät 1 mit einer einzelnen, neben der Laseraussendeeinheit 21 und der Laserempfangseinheit 22 des Laserentfernungsmessers 20 angeordneten, Kamera 41.

In den Figuren 3b und 3c werden zwei beispielhafte Ausgestaltungen eines erfindungsgemässen handhaltbaren Entfernungsmessgerätes 1 mit zwei beispielhaften Ausgestaltungen der Bilderfassungseinheit 40 dargestellt.

Figur 3b zeigt ein handhaltbares Entfernungsmessgerät 1 mit einer auf der einen Seite der Laseraussendeeinheit 21 und der Laserempfangseinheit 22 angeordneten ersten Kamera 41 und einer auf der anderen Seite angeordneten zweiten Kamera 42.

Figur 3c zeigt ein handhaltbares Entfernungsmessgerät 1 mit drei auf derselben Seite des Laserentfernungsmessers angeordneten Kameras 41,43,44.

Die Kameras 41-44 der in den Figuren 3b und 3c gezeigten Bilderfassungseinheiten sind derart ausgestaltet, dass sie durch gleichzeitige Aufnahme eines Bildes ein Weitwinkelbild erzeugbar machen. Es sind diverse weitere, hier aus Platzgründen nicht darstellbare, Kameraanordnungen ausführbar, insbesondere können auf beiden Seiten des Laserentfernungsmessers 20 jeweils mehrere Kameras angeordnet sein, oder es können (zusätzlich oder alternativ) Kameras ober- und/oder unterhalb des Laserentfernungsmessers 20 angeordnet sein.

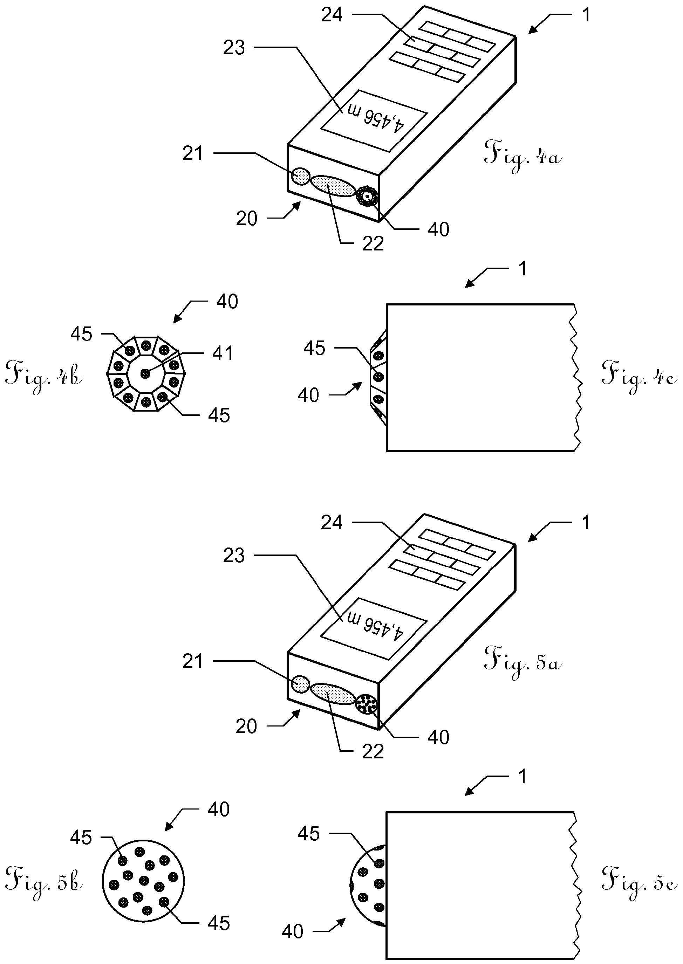

In den Figuren 4a bis 4c und 5a bis 5c sind zwei weitere beispielhafte Ausführungsformen eines erfindungsgemässen handhaltbaren Entfernungsmessgerätes 1 dargestellt, die jeweils eine weitere beispielhafte Form einer erfindungsgemässen Bilderfassungseinheit 40 aufweist.

Die in den Figuren 4a bis 4c gezeigte Bilderfassungseinheit 40 verfügt über eine erste, entlang der Emissionsrichtung des Laserentfernungsmessers 20 ausgerichtete Kamera 41 zur Aufnahme von Bildern des Messbereiches. Darüber hinaus weist die Bilderfassungseinheit 40 eine Vielzahl von weiteren Kameras 45 - in dem gezeigten Beispiel zehn Kameras 45 - auf, die kreisförmig um die erste Kamera 41 angeordnet und in unterschiedliche Zielrichtungen ausgerichtet sind. So ist es möglich, aus den Einzelbildern ein Weitwinkelbild zusammenzusetzen.

Die in den Figuren 5a bis 5c gezeigte Bilderfassungseinheit 40 in Form einer Halbsphäre ausgestaltet, auf deren Oberfläche eine Vielzahl von Kameras 45 angeordnet sind, beispielsweise 18 Kameras. Auch mit dieser Ausführungsform ist es möglich, aus einer Vielzahl gleichzeitig aufgenommener Einzelbilder ein Weitwinkelbild zusammenzusetzen, wobei der Aufnahmewinkel bis zu 180° oder sogar darüber hinaus betragen kann.

Ebenso sind Ausführungsformen mit zwei Halbsphären möglich, die beispielsweise seitlich an dem Entfernungsmessgerät 1 angebracht sind, bzw. eine Halbsphäre oberhalb und eine unterhalb des Gerätes.

Die Kameras 41-45 aller oberhalb beschriebenen Ausführungsformen können vorteilhaft als Wafer-Level-Cameras (WLC) ausgeführt sein. WLC weisen einen Bildsensor, z. B. ein CMOS-Bildsensor, Linsen und Abstandhalter auf, die im Wafer-Level hergestellt, gestapelt und zu einem einzigen Teil zusammengefügt werden. Die Kamera ist dann als integriertes Gesamtsystem auf der Fläche einer Halbleiterscheibe untergebracht. WLC sind mechanisch besonders stabil und nur bei der Fertigung einmal zu kalibrieren.

Insbesondere können auch Kameras mit sogenannter Rückwärtiger Belichtung (backside illumination) verwendet werden, z. B. auf Basis des OmniBSI-2™ von OmniVision®.

Ebenso können die Kameras 41-45 aller oberhalb beschriebenen Ausführungsformen vorteilhaft zur Aufnahme von Hochkontrastbildern (oder High Dynamic Range Images (HDRI)) ausgestaltet sein. Insbesondere weisen die Kameras dazu digitale Bildsensoren mit hohem Dynamikumfang auf und sind beispielsweise mit dem Chip OV10626 von OmniVision® oder vergleichbaren Produkten ausgestattet. Diese Technologie, die bislang zum Beispiel aus Kamerasystemen für den Einsatz als Assistenzsystem in Kraftfahrzeugen bekannt ist, erlaubt das gleichzeitige Erfassen mehrerer Beleuchtungsstufen und ist somit geeignet, gleichzeitig sowohl sonnenbestrahlte als auch im Schatten liegende Bereiche mit hohen Kontrasten abzubilden, das heisst Über- und Unterbelichtungen zu vermeiden. Vorteilhaft kann so die Merkmalsidentifizierung und Merkmalsextraktion im gesamten Bildbereich auch bei schwierigen Lichtverhältnissen optimiert werden.

Alternativ können die Kameras auch zur raschen Aufnahme von Belichtungsreihen ausgestaltet sein, oder die Bilderfassungseinheit 40 weist mindestens eine Kamera zur Aufnahme von Bildern heller Bereiche und mindestens eine Kamera zur Aufnahme von Bildern dunkler Bereiche auf.

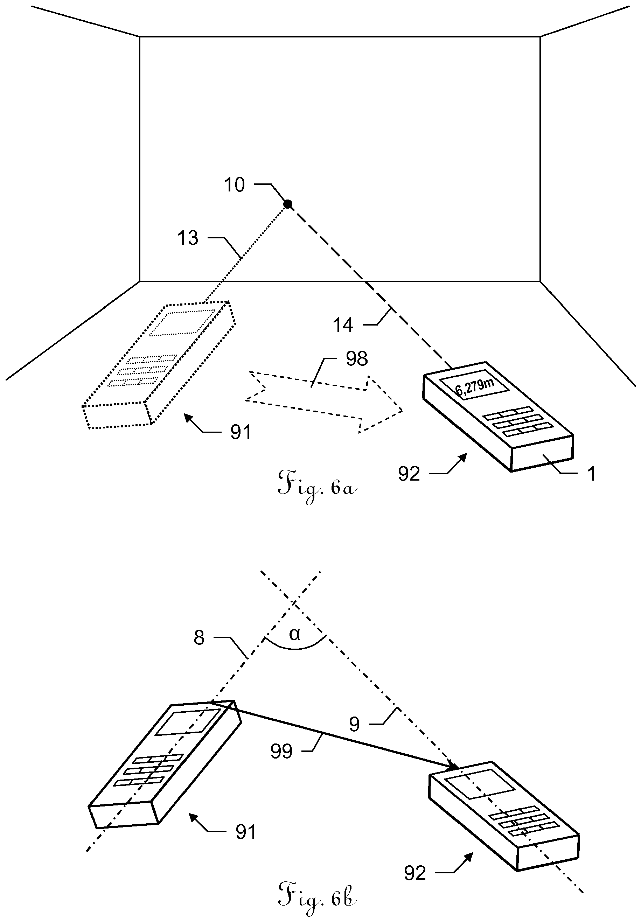

Die Figuren 6a und 6b illustrieren die einem beispielhaften Verfahren zugrundeliegenden Prinzipien. Zunächst wird mittels des Entfernungsmessgerätes 1 von einer ersten Position aus eine erste Entfernung 13 zum einem Zielpunkt 10 gemessen. Im Anschluss wird das Entfernungsmessgerät 1 durch den Benutzer in eine andere Position bewegt und erneut auf den Zielpunkt 10 ausgerichtet. Dann wird eine zweite Entfernung 14 zum Zielpunkt 10 gemessen.

Erfindungsgemäss wird im Rahmen des Verfahrens die räumliche Beziehung 98 zwischen der ersten Zielpose 91 und der zweiten Zielpose 92 des Entfernungsmessgerätes 1 ermittelt, um anschliessend mittels Merkmalsextraktion aus aufgenommenen Bildern der Umgebung ein dreidimensionales Raummodell erzeugen zu können.

In Figur 6b wird die räumliche Beziehung 98 aus Figur 6a detaillierter gezeigt. Dargestellt ist das Entfernungsmessgerät 1 in seiner ersten und in seiner zweiten Zielpose 91,92. Zur zu ermittelnden räumlichen Beziehung 98 zwischen den beiden Zielposen 91,92 gehört zum einen der Versatz 99. Das ist die Entfernung und die Richtung zwischen dem Entfernungsmessgerät 1, bzw. dem Laserentfernungsmessers des Entfernungsmessgerät 1, in der ersten Zielpose 91 und demselben Gerät in der zweiten Zielpose 92. Zum anderen gehört zur räumlichen Beziehung ein Raumwinkel der Ausrichtung des Entfernungsmessgerätes 1 während der beiden Entfernungsmessungen. Dies ist der Winkel α zwischen der ersten Emissionsrichtung 8 und der zweiten Emissionsrichtung 9.

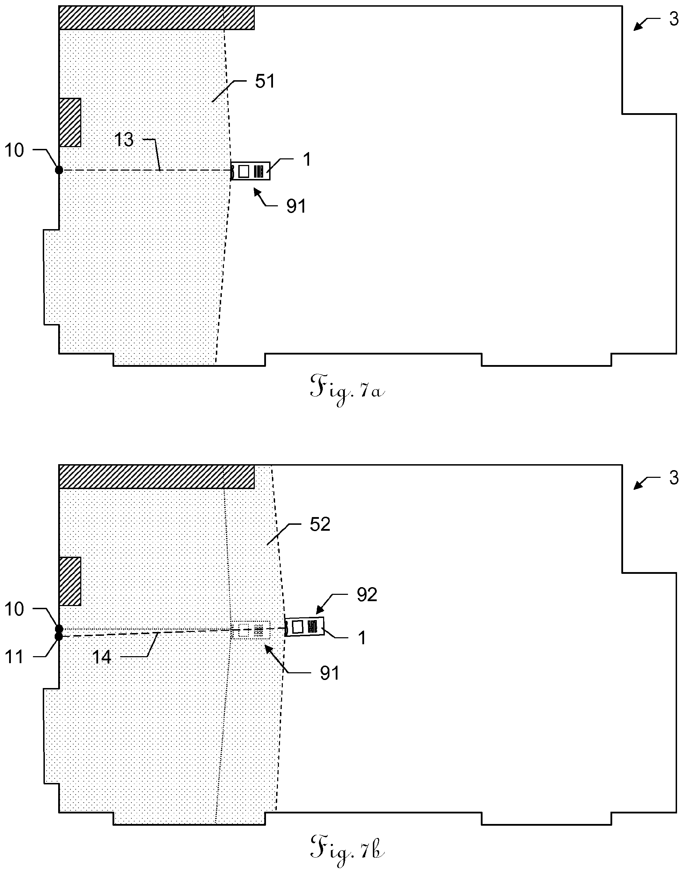

In den Figuren 7a bis 7c werden Schritte einer Messsequenz einer beispielhaften Ausführungsform eines erfindungsgemässen Verfahrens zum Erzeugen eines Raummodells illustriert.

Figur 7a zeigt das Entfernungsmessgerät 1 in einer Messumgebung 3 in einer Draufsicht. Die Messumgebung 3 ist hier ein Innenraum, von dem ein Raummodell erstellt werden soll. Dargestellt ist die Aufnahme eines ersten Bildes 51 eines Bereiches des Innenraumes durch die Bilderfassungseinheit 40 des Entfernungsmessgerätes 1. Diese ist beispielsweise gemäss der in den Figuren 4a-c oder 5a-c dargestellten Ausführungsformen ausgeführt und insbesondere dazu ausgestaltet, Weitwinkelbilder mit einem Winkelbereich von annähernd 180° aufzunehmen. Gleichzeitig mit der Aufnahme des ersten Bildes 51 wird durch den Laserentfernungsmesser 20 des Entfernungsmessgerätes 1 eine Entfernung 13 zu einem Punkt 10 auf einer Wand des aufgenommenen Bereiches der Umgebung 3 gemessen.

Ebenso kann das Entfernungsmessgerät 1 natürlich mehrere Laserentfernungsmesser aufweisen, die Entfernungen gleichzeitig in verschiedenen Richtungen zu verschiedenen Punkten in dem von der Bilderfassungseinheit 40 aufgenommenen Bereich messen. Dies kann - einen entsprechenden Winkel der Bildaufnahme vorausgesetzt - orthogonal zur hier gezeigten Richtung sein, beispielsweise also sowohl nach oben, unten, links und rechts.

Figur 7b zeigt wieder das Entfernungsmessgerät 1 in einer Messumgebung 3 in einer Draufsicht, diesmal bei der Aufnahme eines zweiten Bildes 52 desselben Bereiches des Innenraumes. Gleichzeitig mit der Aufnahme des zweiten Bildes 51 wird durch den Laserentfernungsmesser 20 des Entfernungsmessgerätes 1 eine Entfernung 14 zu einem Punkt 11 auf derselben Wand des aufgenommenen Bereiches der Umgebung 3 gemessen. Insbesondere kann dieser Punkt 11 derselbe Punkt 10 wie bei der ersten Messung sein, er kann sich aber auch in der unmittelbaren Umgebung des ersten Punktes befinden, insbesondere mindestens auf derselben Ebene.

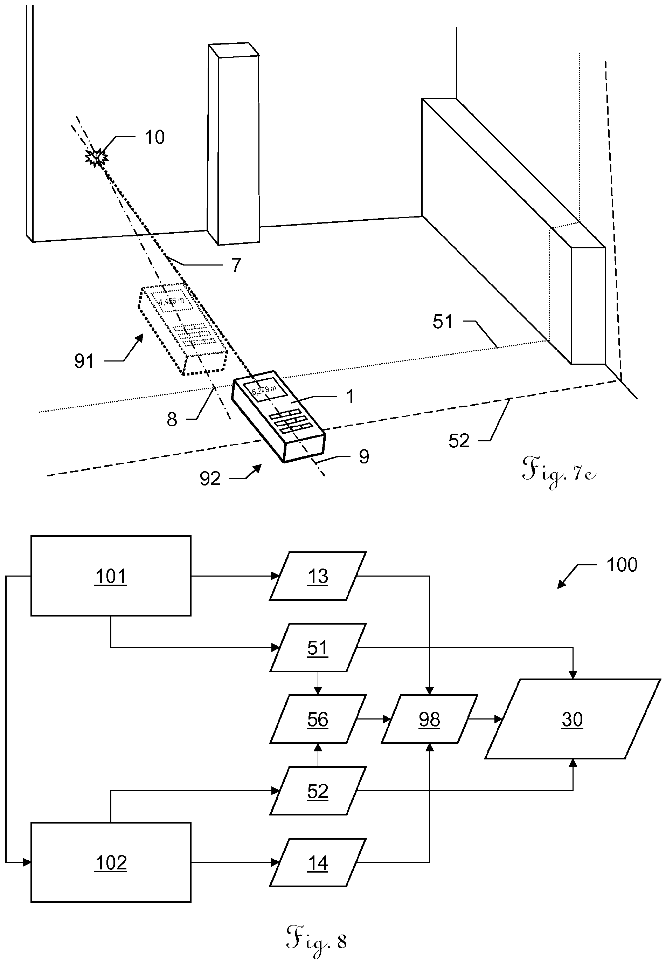

In Figur 7c ist dies in einer räumlichen Darstellung gezeigt: der Zielpunkt 10 wird zunächst von einer ersten Position des Entfernungsmessgerätes 1 aus mittels eines in einer ersten Emissionsrichtung 8 ausgesendeten Laserstrahls 7 angezielt und vermessen, anschliessend von einer zweiten Position aus mittels eines in einer zweiten Emissionsrichtung 9 ausgesendeten Laserstrahls 7. Gleichzeitig zu den Entfernungsmessungen wird von der Bilderfassungseinheit in einer ersten Pose 91 und einer zweiten Pose 92 jeweils ein Bild 51, 52 der Umgebung aufgenommen.

Basierend auf den aufgenommenen Bildern 51, 52 und den gemessenen Entfernungen 13, 14 können Merkmale in der Umgebung identifiziert werden, die in dem den beiden Bildern 51, 52 gemeinsamen Bildbereich abgebildet sind. Basierend auf den identifizierten Merkmalen, das heisst insbesondere durch Merkmalsextraktion, auf der ersten Entfernung und der zweiten Entfernung kann dann eine räumliche Beziehung zwischen den Posen 91,92 ermittelt werden, beispielsweise mit einer Stereobasis zwischen den Positionen der Bilderfassungseinheit, sodass ein dreidimensionales Raummodell erstellbar ist.

Figur 8 illustriert das dargestellte beispielhafte Verfahren 100 anhand eines Flussdiagramms.

In einem ersten Schritt richtet der Benutzer das Gerät auf einen Punkt aus und gibt einen Befehl 101 zum Messen, beispielsweise durch Betätigen einer entsprechenden Taste des Gerätes oder durch Auswählen eines entsprechenden Menüpunktes auf einem berührungsempfindlichen Bildschirm. Daraufhin wird durch das Entfernungsmessgerät vollautomatisch gleichzeitig ein erstes Bild 51 eines Bereichs der Umgebung aufgenommen und eine erste Entfernung 13 zu dem angezielten Punkt in dem Bereich gemessen.

In einem zweiten Schritt verändert der Benutzer die Position des Gerätes, richtet es erneut auf den Punkt aus und gibt einen weiteren Befehl 102 zum Messen.

Daraufhin wird durch das Entfernungsmessgerät vollautomatisch gleichzeitig ein zweites Bild 52 des Bereichs der Umgebung aufgenommen und eine zweite Entfernung 14 zu dem angezielten Punkt (im wesentlichen derselbe Punkt wie bei der ersten Messung) in dem Bereich gemessen.

Die beiden Bilder 51,52 haben einen gemeinsamen Bildbereich 56, in welchem Merkmale identifiziert werden können. Auf diesen basierend kann die räumliche Beziehung 98 ermittelt werden. Dies wird unterstützt durch die gemessenen Entfernungen 13,14, sodass diese räumliche Beziehung 98 bei optimalen Verhältnissen mit einer Genauigkeit im Submillimeterbereich ermittelbar ist.

Anschliessend wird basierend auf dem ersten und dem zweiten Bild 51,52 und auf der ermittelten räumlichen Beziehung 98 der Posen 91,92 ein Raummodell 30 der Umgebung erstellt, sodass Entfernungen zwischen Raumpunkten der Umgebung anhand dieses Raummodells 30 ermittelbar sind.

Insbesondere können im Rahmen des Verfahrens nach dem ersten Schritt durch die Bilderfassungseinheit fortlaufend Bilder erfasst werden, um zu ermitteln und dem Benutzer anzuzeigen, ob die gegenwärtige zweite Position und Ausrichtung des Gerätes zur Ausführung des Verfahrens geeignet ist, z. B. ob der gemeinsame Bildbereich 56 des ersten und des zweiten Bildes ausreichend ist, oder ob der aktuell angezielte Punkt mit dem Punkt der ersten Entfernungsmessung im ausreichenden Masse übereinstimmt.

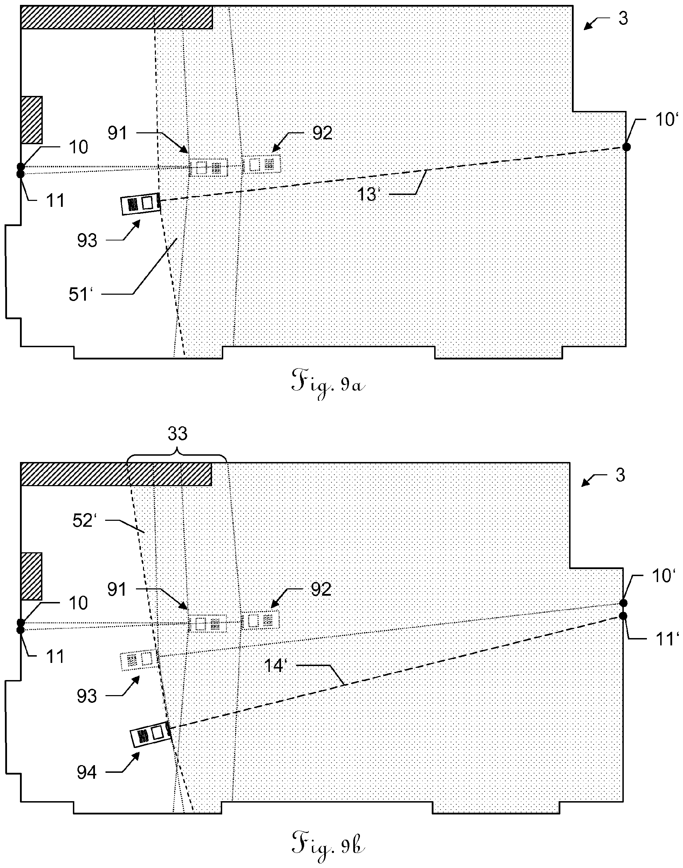

Die Figuren 9a und 9b zeigen eine optionale Ergänzung des erfindungsgemässen Verfahrens. Dargestellt ist jeweils (wie in den Figuren 7a und 7b) das Entfernungsmessgerät 1 in der Messumgebung 3 in einer Draufsicht.

Figur 9a zeigt analog zu Figur 7a die Aufnahme eines ersten Bildes 51' eines zweiten Bereiches des Innenraumes durch die Bilderfassungseinheit 40 des Entfernungsmessgerätes 1 in einer dritten Pose 93. Der erste und der zweite Bereich der Umgebung 3 überschneiden sich dabei teilweise. Gleichzeitig mit der Aufnahme des ersten Bildes 51' des zweiten Bereiches wird durch den Laserentfernungsmesser 20 des Entfernungsmessgerätes 1 eine Entfernung 13' zu einem Punkt 10' auf einer Wand des zweiten Bereiches der Umgebung 3 gemessen.

Figur 9b zeigt das Entfernungsmessgerät 1 bei der Aufnahme eines zweiten Bildes 52' des zweiten Bereiches des Innenraumes in einer vierten Pose 94. Gleichzeitig mit der Aufnahme des zweiten Bildes 51' wird durch den Laserentfernungsmesser 20 des Entfernungsmessgerätes 1 eine Entfernung 14' zu einem Punkt 11' auf derselben Wand des aufgenommenen Bereiches der Umgebung 3 gemessen. Insbesondere kann dieser Punkt 11' derselbe Punkt 10' wie bei der ersten Messung sein, er kann sich aber auch in der unmittelbaren Umgebung des ersten Punktes befinden, insbesondere mindestens auf derselben Ebene.

Basierend auf den aufgenommenen Bildern 51', 52' und den gemessenen Entfernungen 13', 14' können Merkmale in der Umgebung identifiziert werden, die in dem den beiden Bildern 51', 52' gemeinsamen Bildbereich abgebildet sind. Basierend auf den identifizierten Merkmalen, der ersten Entfernung und der zweiten Entfernung kann dann eine räumliche Beziehung zwischen der dritten Pose 93 und der vierten Pose 94 ermittelt werden, sodass ein zweites Teil-Raummodell erstellbar ist. Dieses Teil-Raummodell weist einen Überschnitt 33 mit dem nach dem in den Figuren 7a-c dargestellten Verfahren erstellten Raummodell auf, sodass die beiden Teile basierend auf in dem Überschnitt 33 identifizierbaren Merkmalen zu einem Gesamt-Raummodell vereinigt werden können.

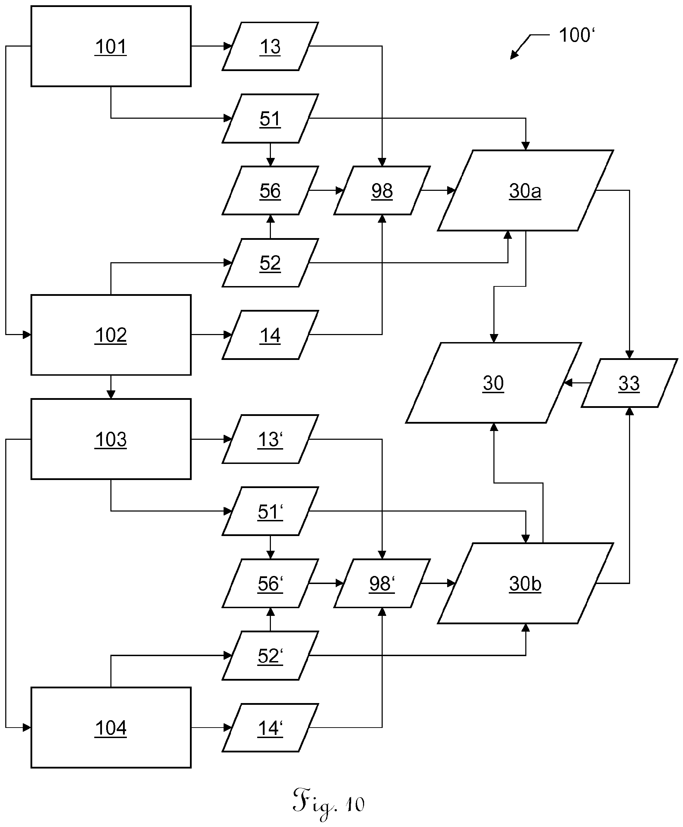

Figur 10 illustriert ein beispielhaftes, wie in Figuren 9a und 9b beschrieben ergänztes Verfahren 100' anhand eines weiteren Flussdiagramms.

Zunächst werden - wie in Bezug auf Figur 8 beschrieben - für einen ersten Bereich der erste Schritt mit einem ersten Benutzerbefehl 101 und der zweite Schritt mit einem zweiten Benutzerbefehl 102 ausgeführt, wobei im Ergebnis ein erstes Teil-Raummodell 30a erstellt wird.

In einem dritten Schritt richtet der Benutzer das Gerät auf einen Punkt in einem anderen Bereich aus und gibt wieder einen Befehl 103 zum Messen, beispielsweise durch Betätigen einer entsprechenden Taste des Gerätes oder durch Auswählen eines entsprechenden Menüpunktes auf einem berührungsempfindlichen Bildschirm.

Daraufhin wird durch das Entfernungsmessgerät vollautomatisch gleichzeitig ein erstes Bild 51' des zweiten Bereichs der Umgebung aufgenommen und eine erste Entfernung 13' zu dem angezielten Punkt in dem zweiten Bereich gemessen.

In einem vierten Schritt verändert der Benutzer die Position des Gerätes, richtet es erneut auf den Punkt aus und gibt einen weiteren Befehl 104 zum Messen.

Daraufhin wird durch das Entfernungsmessgerät vollautomatisch gleichzeitig ein zweites Bild 52' des zweiten Bereichs der Umgebung aufgenommen und eine zweite Entfernung 14' zu dem angezielten Punkt in dem Bereich gemessen.

Die beiden Bilder 51',52' haben einen gemeinsamen Bildbereich 56', in welchem Merkmale identifiziert werden können. Auf diesen basierend kann die räumliche Beziehung 98' ermittelt werden. Dies wird unterstützt durch die gemessenen Entfernungen 13',14', sodass diese räumliche Beziehung 98' bei optimalen Verhältnissen mit einer Genauigkeit im Submillimeterbereich ermittelbar ist.

Anschliessend wird basierend auf dem ersten und dem zweiten Bild 51',52' und auf der ermittelten räumlichen Beziehung 98' der Posen ein Teil-Raummodell 30b des zweiten Bereichs der Umgebung erstellt.

Das erste Teil-Raummodell 30a und das zweite Teil-Raummodell 30b weisen einen Überschnitt 33 miteinander auf. Basierend auf in dem Überschnitt 33 identifizierbaren Merkmalen können die beiden Teil-Raummodelle 30a,b zu einem Gesamt-Raummodell 30 vereinigt werden, sodass Entfernungen zwischen Raumpunkten beider Bereiche der Umgebung anhand dieses Raummodells 30 ermittelbar sind.

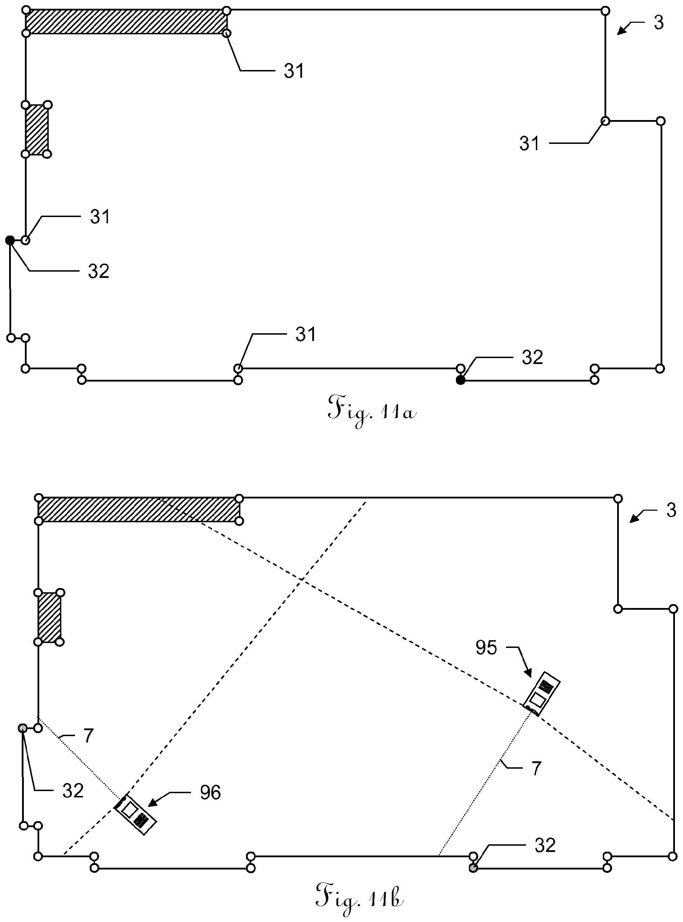

Figur 11a zeigt in einer Draufsicht eine beispielhafte Umgebung 3 mit Raumpunkten 31, deren Position in einem erfindungsgemäss erzeugten Raummodell angezeigt werden kann. Dies sind in diesem Beispiel alle Eckpunkte des Innenraumes. Zwei Eckpunkte 32 sind vom Raummodell nicht erfasst, da sie hinter Ecken liegen, und daher in den Bildern der Bilderfassungseinheit nicht abgebildet wurden.

Wie solche zusätzlichen Raumpunkte 32 in das Raummodell zu ergänzen sind, ist beispielhaft in Figur 11b gezeigt. Das Entfernungsmessgerät 1 wird so ausgerichtet, dass der entsprechende Punkt 32 in einem Bild der Bilderfassungseinheit abgebildet ist, und - insbesondere ausgelöst durch einen Benutzerbefehl - wird ein weiteres Bild eines Bereichs des Innenraumes 3 aufgenommen - optional mit einer weiteren Entfernungsmessung mittels eines Laserstrahls 7 zu einem Punkt auf einer Oberfläche des Innenraums 3, die bereits im Raummodell erfasst ist. So kann die jeweilige Pose 95,96 der Bilderfassungseinheit ermittelt werden, und das Raummodell um die in den weiteren Bildern enthaltenen Informationen, inklusive der weiteren Raumpunkte 32, ergänzt werden.

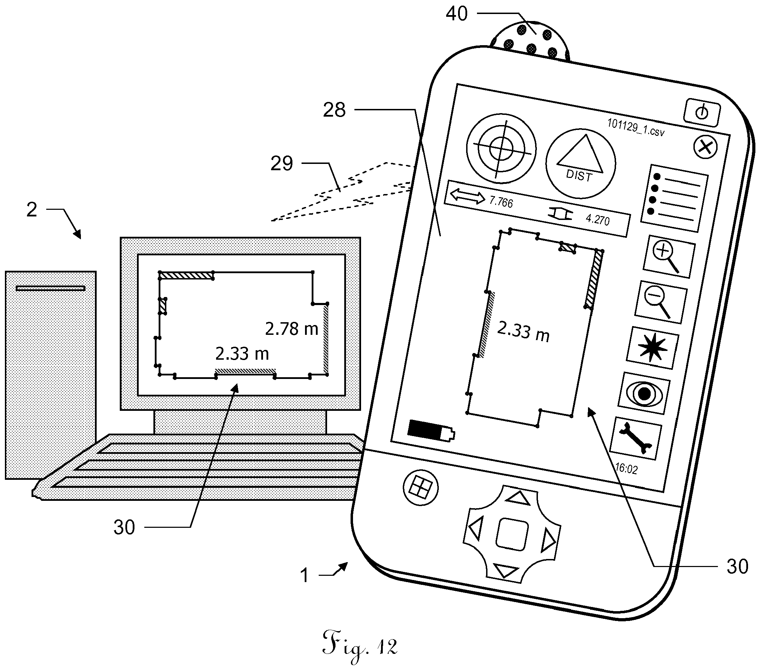

Figur 12 zeigt ein beispielhaftes Raummodell 30, wie es auf einem Touchscreen 28 eines erfindungsgemässen handhaltbaren Entfernungsmessgerätes 1 angezeigt wird. Das dargestellte Entfernungsmessgerät 1 weist eine halbsphärische Bilderfassungseinheit 40 gemäss Figuren 5a-c auf, sowie Mittel zum Übertragen von Raummodell-Daten an ein externes Gerät wie einen Personal Computer 2 mittels einer drahtlosen Verbindung 29. Dies kann beispielsweise eine Bluetooth- oder WiFi-Verbindung sein.

Durch Markieren zweier Punkte (z. B. Eckpunkte) in dem Raummodell 30 auf dem Touchscreen 28 des Entfernungsmessgerätes 1 oder mit einer Maus des Computers 2 kann ein Benutzer sich die Entfernung zwischen den beiden Punkten berechnen und anzeigen lassen. Auch können die Raummodell-Daten an eine Cloud im Internet gesendet werden und so von vielen Benutzern gleichzeitig Entfernungen in der Umgebung anhand des Raummodells 30 ermittelt werden.

Das Raummodell 30, das hier aus Gründen der Übersichtlichkeit zweidimensional dargestellt ist, kann in der Realität natürlich dreidimensional angezeigt werden. Insbesondere können die erfassten Bilder über ein Gitter aus ermittelten Punktkoordinaten gelegt werden. Alternativ kann nur die Geometrie ohne besondere Textur angezeigt werden. Ein Hinein- und Herauszoomen ist in beiden Fällen ebenso möglich wie ein Drehen der Ansicht.

Optional ist es möglich, weitere Messungen in dem Raummodell 30 vorzunehmen, wie z. B. Flächenberechnungen. So kann sich ein Benutzer auf einfache Art und Weise die Grundfläche eines Raumes in Quadratmetern anzeigen lassen. Dachschrägen können bei Bedarf in dem Modell automatisch erkannt werden und in die Berechnung einfliessen.

Weiterhin ist es möglich, ein bestehendes Raummodell 30 in das Entfernungsmessgerät zu laden, und in dem entsprechenden Raum weitere Messungen vorzunehmen, die durch die Aufnahme eines weiteren Bildes automatisch gegenüber den bekannten Raumpunkten referenziert werden und das Raummodell 30 ergänzen. So können nachträgliche Veränderungen an der Umgebung, wie beispielsweise Bohrlöcher in einer Wand, in das bestehende Raummodell 30 eingepflegt werden, ohne ggf. alle Schritte des Verfahrens wiederholen zu müssen.

Im folgenden wird als ein zweiter Aspekt der Erfindung ein Verfahren zum indirekten Ermitteln einer Distanz zwischen zwei Zielpunkten mittels eines handhaltbaren Entfernungsmessgerätes dargestellt.

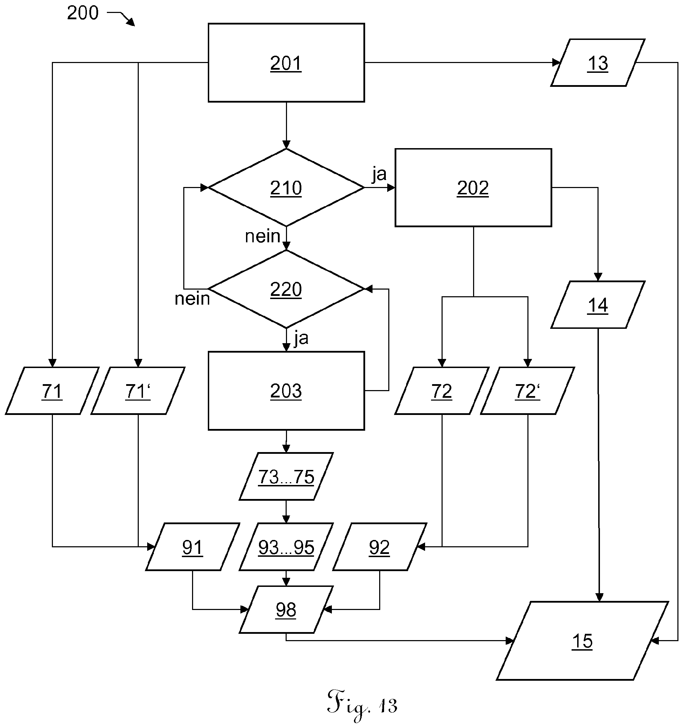

In Figur 13 ist anhand eines Flussdiagramms eine beispielhafte Ausführungsform eines Verfahrens 200 zum Ermitteln einer Distanz 15 zwischen zwei Zielpunkten dargestellt, bei welchem eine räumliche Beziehung 98 zwischen zwei Zielposen 91,92 durch die Aufnahme zusätzlicher "Überbrückungsbilder" 73-75 ermittelbar ist. Dabei wird an einem auf einen ersten Zielpunkt ausgerichteten erfindungsgemässen Entfernungsmessgerät in Schritt 201 eine erste Entfernungsmessung ausgelöst und zeitgleich (bzw. im wesentlichen Zeitgleich) ein erstes Zielbild 71 aufgenommen. Anschliessend wird zur Ermittlung der Pose 91 das Entfernungsmessgerät von einer anderen Position erneut (im wesentlichen) auf denselben Punkt ausgerichtet und ein zweites Bild 71' aufgenommen. Die gemessene Entfernung 13 wird gespeichert, und aus dem Zielbild 71 und dem weiteren Bild 71' und gegebenenfalls gleichzeitig mit den Bildaufnahmen gemessenen Entfernungen wird eine aktuelle erste Zielpose 91 des Entfernungsmessgerätes ermittelt.

Anschliessend wird das Entfernungsmessgerät durch den Benutzer auf den zweiten Zielpunkt ausgerichtet. Dabei wird in Schritt 210 kontinuierlich geprüft, ob eine weitere Entfernungsmessung ausgelöst wird. Solange dies nicht der Fall ist, wird in Schritt 220 kontinuierlich geprüft, ob eine neue Pose 93-95 des Entfernungsmessgerätes durch Aufnahme eines Überbrückungsbildes ermittelt werden muss.

Muss eine neue Pose ermittelt werden, wird in Schritt 203 ein Überbrückungsbild 73-75 aufgenommen, das einen Überlappungsbereich mit dem ersten Zielbild bzw. mit dem vorherigen Überbrückungsbild aufweist. Anhand dieses Überlappungsbereiches und der zuvor ermittelten Pose des Entfernungsmessgerätes wird eine aktuelle Pose 93-95 ermittelt.

Bei Auslösen der zweiten Entfernungsmessung durch den Benutzer wird in Schritt 202 eine Entfernung 14 zum zweiten Zielpunkt gemessen und ein zweites Zielbild 72 aufgenommen, das ebenfalls einen Überlappungsbereich mit dem zuvor aufgenommenen Bild aufweist. Die gemessene Entfernung 14 wird gespeichert, und anhand des Überlappungsbereiches und gegebenenfalls eines weiteren Bildes 72' des Bereichs um den zweiten Zielpunkt sowie gegebenenfalls gleichzeitig mit den Bildaufnahmen gemessenen Entfernungen wird eine zweite Zielpose 92 ermittelt.

Aus den ermittelten Posen 91-95 wird dann eine räumliche Beziehung 98 zwischen der ersten Zielpose 91 und der zweiten Zielpose 92 abgeleitet. Aus der räumlichen Beziehung 98, der ersten Entfernung 13 und der zweiten Entfernung 14 ist die Distanz 15 zwischen dem ersten Zielpunkt und dem zweiten Zielpunkt ermittelbar.

In einer speziellen Ausführungsform kann zusätzlich anhand der Bilder der Umgebung ein Raummodell erstellt werden. Dies wird beispielsweise durch einen SLAM-Algorithmus erreicht, also einen Algorithmus zum gleichzeitigen Lokalisieren der Kameras und Kartieren der Umgebung anhand der Kamerabilder.

Basierend auf den ermittelten Posen wird anschliessend mittels Vorwärtsschnitt anhand der Bilder der Reihe zusätzlich ein Raummodell berechnet, beispielsweise eine Punktwolke, die 3D-Koordinaten von Punkten der Umgebung beinhaltet und mit den aufgenommenen Bilder belegt wird. Die 3D-Punktwolke wird vorzugsweise mit Hilfe von durch den Laserdistanzmesser gemessenen Entfernungen skaliert - vorzugsweise wird gleichzeitig mit jeder Bildaufnahme eine Entfernung gemessen.

Basierend auf Bildern der Umgebung, die mit unterschiedlichen Posen, das heisst Positionen und Ausrichtungen, einer Kamera aufgenommen wurden, kann eine Punktwolke der Umgebung generiert werden. Die Punktwolke kann beispielsweise durch einen Structure-from-Motion-Algorithmus (SfM) oder auch mittels eines Simultaneous-Localisation-and-Mapping-Algorithmus (SLAM) generiert werden. Das heisst, dass für diejenigen Bilder, die für eine spätere Berechnung der Punktwolke verwendet werden, unter Zuhilfenahme unterscheidbarer, insbesondere hervorstechender, Punkte in der Umgebung, die jeweils in mindestens zwei der Bilder abgebildet werden (Überlappungsbereiche), die jeweilige Pose der Kamera ermittelt wird. Die unterscheidbaren Punkte in der Umgebung werden dann in jedem der mindestens zwei Bilder identifiziert, und die Posen werden mittels Rückwärtsschnitt anhand der in den Bildern identifizierten Punkte sowie anhand der Entfernungsmessungen berechnet.

Sobald die Posen ermittelt wurden, das heisst die Positionen und Orientierungen der Kamera zu dem Zeitpunkt, an welchem die jeweiligen Bilder aufgenommen wurden, wird basierend auf diesen und auf den überlappenden Bildregionen mittels photogrammetrischer Verfahren ein Raummodell berechnet.

Das Raummodell kann dann beispielsweise zum Ermitteln der räumlichen Beziehung zwischen der ersten Zielpose und der zweiten Zielpose herangezogen werden und, insbesondere zur Beschleunigung späterer Messungen in derselben Umgebung, auf dem Gerät gespeichert werden.

Ein bereits bestehendes Raummodell kann bei jeder Messung durch Aufnahme weiterer Bilder ergänzt bzw. verdichtet werden.

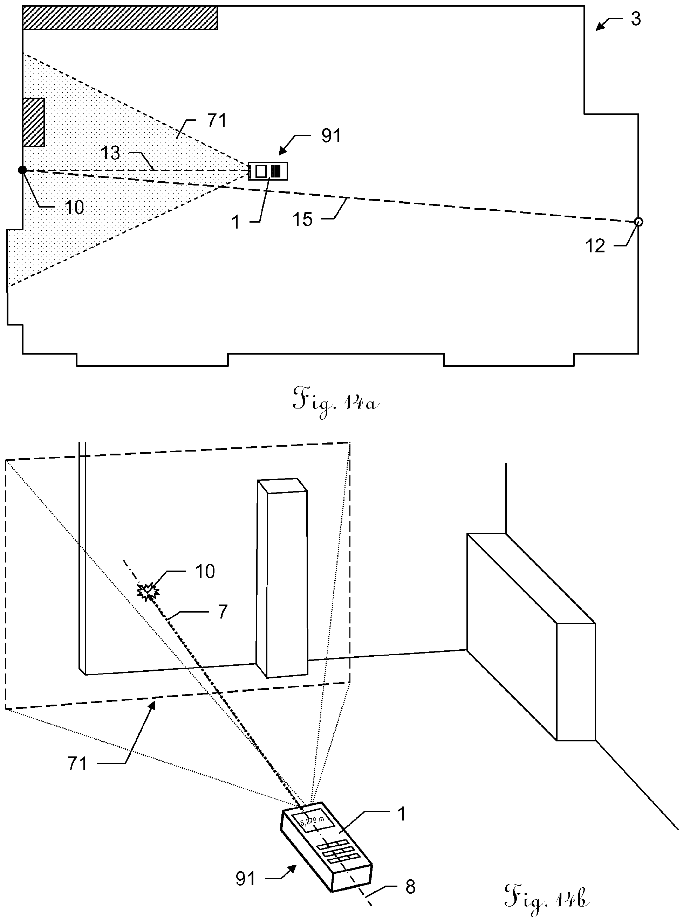

In den Figuren 14a bis 14f werden einzelne Schritte einer beispielhaften Ausführungsform eines Verfahrens zum Ermitteln einer Distanz 15 zwischen zwei Zielpunkten 10,11 illustriert.

Figur 14a zeigt das Entfernungsmessgerät 1 in einer Messumgebung in einer Draufsicht. Dargestellt sind die beiden Zielpunkte 10,12 und die zu ermittelnde Distanz 15. Das Entfernungsmessgerät misst die Entfernung 13 zum ersten Zielpunkt 10 und nimmt gleichzeitig dazu ein erstes Zielbild 71 auf. In Figur 14b ist dies in einer räumlichen Darstellung gezeigt: der Zielpunkt 10 wird mittels eines in einer ersten Emissionsrichtung 8 ausgesendeten Laserstrahls 7 angezielt und vermessen. Mittels des aufgenommenen Zielbildes 71 und der gemessenen Entfernung 13 kann eine relative Position und Ausrichtung (erste Zielpose 91) ermittelt werden.

Zur Verbesserung der Posenermittlung kann vorzugsweise vor oder nach der Messung ein zusätzliches Bild des Messbereichs aus einer anderen Position und/oder mit anderer Ausrichtung aufgenommen werden, oder auch ein vorhandenes, insbesondere im Gerät bereits gespeichertes, Raummodell herangezogen werden.

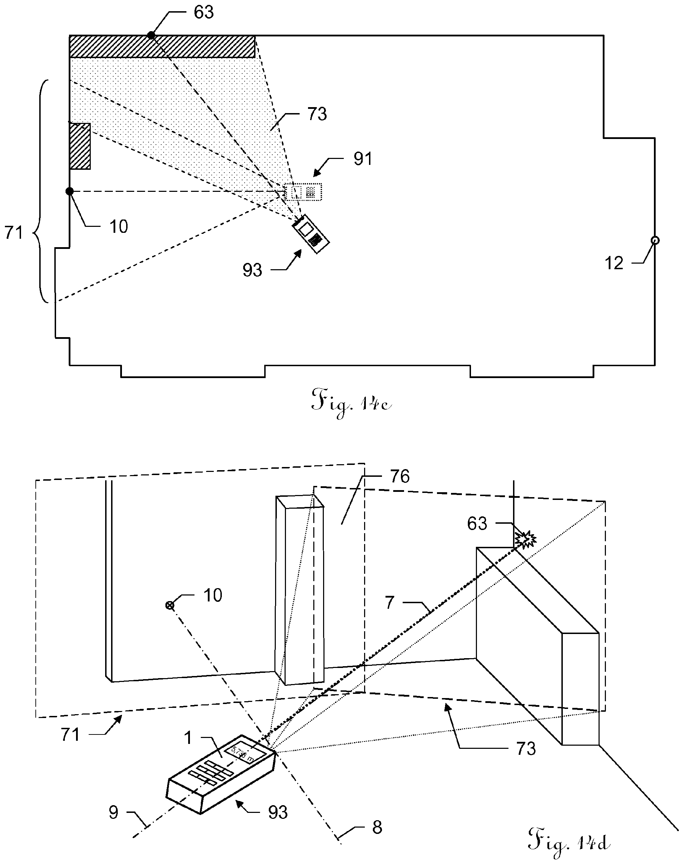

Die Figuren 14c und 14d zeigen die Aufnahme eines ersten Überbrückungsbildes 73 in einer Draufsicht und einer räumlichen Darstellung.

Während der (hier nicht gezeigte) Benutzer das Entfernungsmessgerät 1 langsam in Richtung des zweiten Zielpunktes 11 ausrichtet, nimmt das Entfernungsmessgerät 1 selbsttätig Überbrückungsbilder auf, hier ein erstes Überbrückungsbild 73, das einen Überlappungsbereich 76 mit dem ersten Zielbild 71 aufweist. In dem gemeinsamen Überlappungsbereich 76 werden dann Merkmale identifiziert, anhand derer mittels Rückwärtsschnitt die zum ersten Überbrückungsbild 73 gehörende Pose 93 ermittelt wird.

Gleichzeitig zur Aufnahme des ersten Überbrückungsbildes 73 wird in dieser Ausführungsform des Verfahrens durch das Entfernungsmessgerät 1 selbsttätig durch einen in einer zweiten Emissionsrichtung 9 ausgesendeten Laserstrahl 7 eine Skalierentfernung zu einem in dem Überbrückungsbild 73 abgebildeten Punkt 63 der Umgebung gemessen. Diese Skalierentfernung kann zur Skalierung der aktuellen Pose 93 des Entfernungsmessgerätes 1 herangezogen werden.

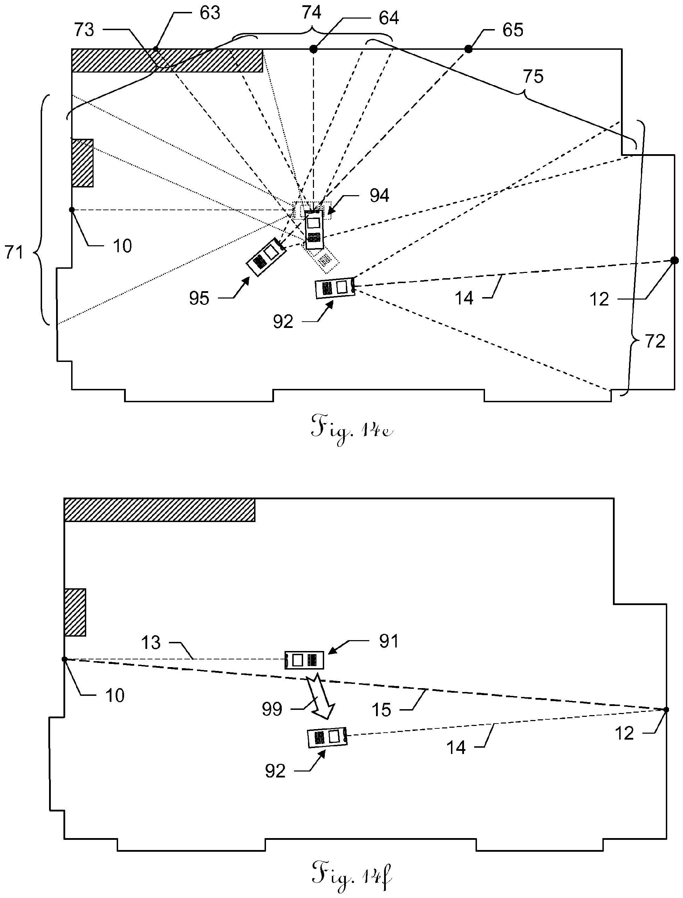

Figur 14e zeigt in einer Draufsicht die Aufnahme weiterer Überbrückungsbilder 74,75 und des zweiten Zielbildes 72. Während der Benutzer das Entfernungsmessgerät 1 weiter kontinuierlich auf den zweiten Zielpunkt 12 ausrichtet, erkennt dieses selbständig, ob weitere Überbrückungsbilder zur Ermittlung weiterer Posen aufgenommen werden müssen. Dies kann beispielsweise über eine fortlaufende Bildaufnahme durch die Kameras und/oder einen Beschleunigungssensor des Entfernungsmessgerätes 1 erfolgen. Bewegt der Benutzer das Entfernungsmessgerät 1 zu schnell oder in einer Weise, dass keine zur Ermittlung von Posen geeigneten Überbrückungsbilder aufgenommen werden können, kann das Gerät beispielsweise einen Warnton ausgeben. Alternativ kann die Aufnahme von Überbrückungsbildern statt automatisch durch das Gerät auch durch den Benutzer ausgelöst werden.

Die weiteren Überbrückungsbilder 74,75 werden jeweils so aufgenommen, dass ein Überlappungsbereich mit dem jeweils vorangegangen Bild entsteht, in welchem Merkmale identifiziert werden können, sodass die jeweilige Pose 94,95 des Entfernungsmessgerätes 1 ermittelbar ist. Zu in dem jeweiligen Überbrückungsbild 74,75 abgebildeten Punkten 64,65 der Umgebung gemessene Skalierentfernungen werden gleichzeitig zur Aufnahme des Bildes gemessen. Die Skalierentfernungen können zur Skalierung der jeweils aktuellen Pose 94,95 herangezogen werden.

Mit Auslösung der Messung zum zweiten Zielpunkt 12 durch den Benutzer nimmt das Entfernungsmessgerät gleichzeitig ein zweites Zielbild 72 auf, wobei erneut ein Überlappungsbereich mit dem zuletzt aufgenommenen Überbrückungsbild 75 entsteht, in dem Merkmale identifiziert werden können, sodass die zweite Zielpose 92 ermittelbar ist.

Figur 14f illustriert die Ermittlung der Distanz 15 in Kenntnis der beiden Zielposen 91,92.

Die Zielposen 91,92 umfassen jeweils eine mindestens relative Position und Orientierung, beispielsweise relativ zu einem Referenzpunktfeld der Umgebung oder relativ zueinander. Daraus ist eine räumliche Beziehung ableitbar, die einen Versatz 99 und einen Winkel zwischen der Emissionsrichtung bei der Messung der ersten Entfernung 13 und der Emissionsrichtung bei der Messung der zweiten Entfernung 14 beinhaltet. Der Versatz 99 umfasst den Abstand zwischen der Position des Entfernungsgerätes, insbesondere des Laserentfernungsmessers, bei der ersten und der zweiten Messung, sowie die Richtung dieses Abstandes im Raum. Aus der Kombination der räumlichen Beziehung, der ersten Entfernung 13 und der zweiten Entfernung 14 ist so die gesuchte Distanz 15 ermittelbar.

Es sei darauf hingewiesen, dass - obwohl dies in der voranstehend beschriebenen beispielhaften Ausführungsform so vorgesehen ist - die Bilder nicht unbedingt in Richtung der jeweils aktuellen Emissionsrichtung aufgenommen werden müssen. Ebenso kann die Kamera beispielsweise nach unten oder zur Seite ausgerichtet sein, um die jeweils aktuelle Pose des Entfernungsmessgerätes ermitteln zu können. Ein Skalieren mittels des Laserentfernungsmessers wäre dann allerdings nicht möglich. Ebenso muss es sich bei den Bildern 51-55 nicht um Einzelbilder handeln, sondern die Bilderfassungseinheit kann wie in Figuren 3b, 3c, 4a-c oder 5a-c dargestellt ausgestaltet sein und mehrere Kameras aufweisen, wobei die Bilder 51-55 jeweils aus mehreren verknüpften Einzelbildern zusammengesetzt werden. Insbesondere wenn die Bilderfassungseinheit wie in den Figuren 5a-c dargestellt ausgestaltet ist, kann auf Überbrückungsbilder verzichtet werden.

Das dargestellte Verfahren kann ebenso dazu verwendet werden, zusätzlich zu der Distanzmessung ein Raummodell der Messumgebung oder von Teilen der Messumgebung zu erzeugen, wie es oben in Bezug auf die Figuren 7a bis 12 erläutert wurde.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

## Patentansprüche

1. Handhaltbares Entfernungsmessgerät (1) mit
• einem Laserentfernungsmesser (20) zur Messung von Entfernungen (13, 14) zu Zielpunkten (10, 11) in einer Umgebung (3) mittels Aussenden eines Laserstrahls in einer Emissionsrichtung, wobei der Laserentfernungsmesser (20) an einer Vorderseite des Entfernungsmessgerätes (1) eine Laseraussendeeinheit (21) und eine Laserempfangseinheit (22) aufweist,
• einer Auswertekomponente (25) zur Ableitung und Bereitstellung der gemessenen Entfernungen (13, 14),
• einer Bilderfassungseinheit (40) zur Erfassung von Bildern (51, 52) der Umgebung (3),
• einer Anzeigevorrichtung (23) und
• einer Steuerungseinheit (27) mit Programmcode zur Steuerung einer Raummodellierungsfunktionalität des Entfernungsmessgerätes (1), die zur Verwendung mit einer Messsequenz ausgebildet ist, im Rahmen welcher von unterschiedlichen Positionen des Entfernungsmessgerätes (1) aus ein erstes Bild (51) und ein zweites Bild (52) eines Bereiches der Umgebung erfasst werden, die einen gemeinsamen Bildbereich (56) aufweisen, wobei die Bilderfassungseinheit (40) beim Erfassen des ersten Bildes (51) und des zweiten Bildes (52) unterschiedliche Posen (91, 92) einnimmt, die die jeweilige Position und Ausrichtung des Entfernungsmessgerätes (1) repräsentieren, wobei die Bilderfassungseinheit (40) mindestens eine erste Kamera (41) und eine zweite Kamera (42) aufweist und dazu ausgestaltet ist,
• Bilder (51, 52) in Richtung der Emissionsrichtung des Laserentfernungsmessers (20) zu erfassen und
• mit der ersten Kamera (41) und der zweiten Kamera (42) gleichzeitig Bilder (51, 52) zu erfassen, wobei im Rahmen der Raummodellierungsfunktionalität
• in Reaktion auf einen ersten Benutzerbefehl (101) von einer ersten Position des Entfernungsmessgerätes (1) aus
▪ durch die Bilderfassungseinheit (40) ein erstes Bild (51) eines ersten Bereiches der Umgebung (3) erfasst wird, und
▪ durch den Laserentfernungsmesser (20) in zeitlichem Zusammenhang, insbesondere zeitgleich, mit dem Erfassen des ersten Bildes (51) eine erste Entfernung (13) zu einem ersten Zielpunkt (10) in dem ersten Bereich gemessen wird, und
• in Reaktion auf einen zweiten Benutzerbefehl (102) von einer zweiten Position des Entfernungsmessgerätes (1) aus
▪ durch die Bilderfassungseinheit (40) ein zweites Bild (52) des ersten Bereiches der Umgebung (3) erfasst wird, und
▪ durch den Laserentfernungsmesser (20) in zeitlichem Zusammenhang, insbesondere zeitgleich, mit dem Erfassen des zweiten Bildes (52) eine zweite Entfernung (14) zu dem ersten Zielpunkt (10) oder zu einem zweiten Zielpunkt (11) in unmittelbarer Umgebung des ersten Zielpunktes (10) gemessen wird,
wobei das erste Bild (51) und das zweite Bild (52) jeweils aus Einzelbildern mindestens der ersten Kamera (41) und der zweiten Kamera (42) zusammengesetzte Weitwinkelbilder sind, und wobei die Steuerungseinheit (27) dazu ausgestaltet ist, im Rahmen der Raummodellierungsfunktionalität
• in den Bildern (51, 52) Merkmale der Umgebung (3) zu identifizieren, die in dem gemeinsamen Bildbereich (56) abgebildet sind,
• basierend auf den identifizierten Merkmalen, der ersten Entfernung (13) und der zweiten Entfernung (14) eine räumliche Beziehung (98) zwischen den Posen (91, 92) zu ermitteln, insbesondere inklusive einer Stereobasis, und
• basierend auf dem ersten Bild (51), dem zweiten Bild (52) und der räumlichen Beziehung (98) mittels Stereophotogrammetrie ein dreidimensionales Raummodell (30) der Umgebung (3) zu erstellen, wobei Entfernungen zwischen Raumpunkten in der Umgebung (3) anhand des Raummodells (30) ermittelbar sind,
wobei
• die Anzeigevorrichtung (23) zum Anzeigen des Raummodells (30) und von Raumpunkten (31) ausgestaltet ist,
• das Entfernungsmessgerät (1) eine Eingabevorrichtung (24) zur Auswahl von Raumpunkten in dem Raummodell (30) durch einen Benutzer aufweist, insbesondere wobei die Anzeigevorrichtung und die Eingabevorrichtung als ein Touchscreen (28) ausgestaltet sind,
• die Steuerungseinheit (27) dazu ausgestaltet ist, eine Entfernung zwischen den ausgewählten Raumpunkten (31) zu ermitteln, und
• die Anzeigevorrichtung (23) dazu ausgestaltet ist, die ermittelte Entfernung anzuzeigen.

2. Handhaltbares Entfernungsmessgerät (1) nach Anspruch 1,
**dadurch gekennzeichnet, dass**
die erste Kamera (41) auf einer ersten Seite und die zweite Kamera (42) auf einer zweiten Seite der Laseraussendeeinheit (21) und der Laserempfangseinheit (22) angeordnet sind.

3. Handhaltbares Entfernungsmessgerät (1) nach Anspruch 1,
**dadurch gekennzeichnet, dass**
die Bilderfassungseinheit (40) mindestens drei Kameras (41-44) aufweist und dazu ausgestaltet ist, mit den mindestens drei Kameras (41-44) gleichzeitig Bilder (51, 52) der Umgebung (3) zu erfassen.

4. Handhaltbares Entfernungsmessgerät (1) nach einem der vorangehenden Ansprüche,
**dadurch gekennzeichnet, dass**
die Bilderfassungseinheit (40) dazu ausgestaltet ist, im Rahmen der Raummodellierungsfunktionalität fortlaufend Bilder aufzunehmen, wobei das Entfernungsmessgerät (1) dazu ausgestaltet ist, basierend auf den fortlaufend aufgenommenen Bildern zu ermitteln, ob eine gegenwärtige zweite Position und Ausrichtung des Gerätes (1) zur Ausführung der Raummodellierungsfunktionalität geeignet ist.

5. Handhaltbares Entfernungsmessgerät (1) nach einem der vorangehenden Ansprüche,
**dadurch gekennzeichnet, dass**
der von den Bildern (51, 52) erfasste Winkelbereich mindestens 120°, mindestens 150° oder mindestens 180° umfasst, insbesondere wobei die Bilderfassungseinheit (40) eine Vielzahl von Kameras (41-45) aufweist, und/oder die Kameras (41-45)
• in Form einer Halbsphäre angeordnet sind,
• mit Monochrom-Bildsensoren ausgestattet sind,
• als Wafer-Level-Cameras ausgeführt sind, und/oder
• mit rückwärtiger Belichtung ausgeführt sind.

6. Handhaltbares Entfernungsmessgerät (1) nach einem der vorangehenden Ansprüche,
**dadurch gekennzeichnet, dass**
das Entfernungsmessgerät (1) eine Zielsuch-Kamera zur Aufnahme von Bildern in Richtung der Emissionsrichtung aufweist und die Anzeigevorrichtung (23) zum Anzeigen eines Live-Bildes der Zielsuch-Kamera ausgestaltet ist.

7. Handhaltbares Entfernungsmessgerät (1) nach einem der vorangehenden Ansprüche,
**dadurch gekennzeichnet, dass**
• das Raummodell (30) eine Vielzahl mittels Merkmalsextraktion gewonnener Raumkoordinaten, insbesondere eine Punktwolke, sowie Bilddaten der von Bilderfassungseinheit (40) aufgenommenen Bilder (51, 52) aufweist, und/oder
• die Steuerungseinheit (27) dazu ausgestaltet ist, im Rahmen der Raummodellierungsfunktionalität ein erstes Teil-Raummodell (30a) und ein zweites Teil-Raummodell (30b), die einen gemeinsamen Überschnitt (33) haben, zu einem Gesamt-Raummodell (30) zusammenzufügen, wobei Entfernungen zwischen Raumpunkten (31) beider Bereiche der Umgebung anhand des Raummodells (30) ermittelbar sind, und/oder
• das Entfernungsmessgerät Mittel zur kabellosen Datenübertragung (29) aufweist, wobei
▪ das Raummodell (30) mittels der kabellosen Datenübertragung (29) von dem Entfernungsmessgerät (1) an mindestens ein externes Gerät (2) übermittelbar ist, und/oder
▪ mittels der kabellosen Datenübertragung (29) Daten von dem Entfernungsmessgerät (1) an mindestens ein externes Gerät (2) übermittelbar sind, wobei die Daten insbesondere mindestens Koordinaten von Raumpunkten (31) und/oder Bild- und Entfernungsdaten aufweisen, und das Raummodell (30) basierend auf den Daten durch eine Recheneinheit des externen Gerätes (2) erstellbar ist.

8. Handhaltbares Entfernungsmessgerät (1) nach einem der vorangehenden Ansprüche,
**dadurch gekennzeichnet, dass**
• die erste Kamera (41) und/oder die zweite Kamera (42) zur Aufnahme von Hochkontrastbildern ausgestaltet ist, und
• die Steuerungseinheit (27) dazu ausgestaltet ist, im Rahmen der Raummodellierungsfunktionalität Merkmale in den Hochkontrastbildern zu identifizieren.

9. Handhaltbares Entfernungsmessgerät (1) nach einem der vorangehenden Ansprüche,
**gekennzeichnet durch**
• eine Vielzahl von Laserentfernungsmessern (20) zum Messen von Entfernungen zu einer Vielzahl von Punkten in dem ersten Bereich, wobei die Steuerungseinheit (27) dazu ausgestaltet ist, die Entfernungen zu der Vielzahl von Punkten zum Ermitteln der räumlichen Beziehung (98) heranzuziehen, und/oder
• einen Beschleunigungs- und/oder Lagesensor (26), insbesondere aufweisend ein Gyroskop, einen Neigungssensor oder einen Kompass, zum Bereitstellen von Beschleunigungs- bzw. Lagedaten des Entfernungsmessgerätes (1), wobei die Steuerungseinheit (27) dazu ausgestaltet ist, die Beschleunigungs- bzw. Lagedaten zum Ermitteln der räumlichen Beziehung (98) heranzuziehen.

10. Verfahren (100) zum Erzeugen eines Raummodells (30) einer Umgebung (3) mittels eines handhaltbaren Entfernungsmessgerätes (1), das einen Laserentfernungsmesser (20) und eine Bilderfassungseinheit (40) mit mindestens einer ersten Kamera (41) und einer zweiten Kamera (42) aufweist, mit einer Messsequenz aufweisend
• ein Erfassen eines ersten Bildes (51) eines ersten Bereiches der Umgebung (3) durch die Bilderfassungseinheit (40) mit der ersten Kamera (41) und der zweiten Kamera (42) gleichzeitig von einer ersten Position des Entfernungsmessgerätes (1) aus,
• in zeitlichem Zusammenhang, insbesondere zeitgleich, mit dem Erfassen des ersten Bildes (51) ein Messen einer ersten Entfernung (13) zu einem ersten Zielpunkt (10) in dem ersten Bereich der Umgebung (3) durch den Laserentfernungsmesser (20),
• ein Erfassen eines zweiten Bildes (52) des ersten Bereiches der Umgebung (3) durch die Bilderfassungseinheit (40) mit der ersten Kamera (41) und der zweiten Kamera (42) gleichzeitig von einer von der ersten Position des Entfernungsmessgerätes (1) abweichenden zweiten Position aus, und
• in zeitlichem Zusammenhang, insbesondere zeitgleich, mit dem Erfassen des zweiten Bildes (52) ein Messen einer zweiten Entfernung (14) zu dem ersten Zielpunkt (10) oder zu einem anderen Zielpunkt (11) in unmittelbarer Umgebung des ersten Zielpunktes (10),
wobei das erste Bild (51) und das zweite Bild (52) jeweils aus Einzelbildern mindestens der ersten Kamera (41) und der zweiten Kamera (42) zusammengesetzte Weitwinkelbilder sind und einen gemeinsamen Bildbereich (56) aufweisen, und die Bilderfassungseinheit (40) beim Erfassen des ersten Bildes (51) und des zweiten Bildes (52) unterschiedliche Posen (91, 92) einnimmt, die die jeweilige Position und Ausrichtung des Entfernungsmessgerätes (1) repräsentieren, und wobei im Rahmen des Verfahrens
• in den Bildern (51, 52) Merkmale der Umgebung (3) identifiziert werden, die in dem gemeinsamen Bildbereich (56) abgebildet sind,
• basierend auf den identifizierten Merkmalen, der ersten Entfernung (13) und der zweiten Entfernung (14) eine räumliche Beziehung (98) zwischen den Posen (91, 92) ermittelt wird, insbesondere inklusive einer Stereobasis,
• basierend auf dem ersten Bild (51), dem zweiten Bild (52) und der räumlichen Beziehung (98) mittels Stereophotogrammetrie ein dreidimensionales Raummodell (30) der Umgebung (3) erstellt wird, wobei Entfernungen zwischen Raumpunkten (31) der Umgebung anhand des Raummodells (30) ermittelbar sind,
• das Raummodell (30) auf einer Anzeigevorrichtung (23) des Entfernungsmessgerätes (1) angezeigt wird, und
• eine Entfernung zwischen zwei mittels einer Eingabevorrichtung (24) durch einen Benutzer ausgewählten Raumpunkten (31) von einer Steuerungseinheit (27) des Entfernungsmessgerätes (1) ermittelt und auf der Anzeigevorrichtung (23) angezeigt wird, insbesondere wobei das Entfernungsmessgerät (1) einen Touchscreen (28) aufweist, der die Anzeigevorrichtung und die Eingabevorrichtung umfasst.

11. Verfahren (100) nach Anspruch 10, wobei das erstellte Raummodell ein erstes Teil-Raummodell (30a) ist,
**dadurch gekennzeichnet, dass**
die Messsequenz zusätzlich aufweist
• ein Erfassen eines dritten Bildes (51') eines zweiten Bereiches der Umgebung (3) durch die Bilderfassungseinheit (40) von einer dritten Position des Entfernungsmessgerätes (1) aus,
• in zeitlichem Zusammenhang, insbesondere zeitgleich, mit dem Erfassen des dritten Bildes (51') ein Messen einer dritten Entfernung (13') zu einem zweiten Zielpunkt (10') in dem zweiten Bereich der Umgebung (3) durch den Laserentfernungsmesser (20),
• ein Erfassen eines vierten Bildes (52') des zweiten Bereiches der Umgebung (3) durch die Bilderfassungseinheit (40) von einer von der dritten Position des Entfernungsmessgerätes (1) abweichenden vierten Position aus, und
• in zeitlichem Zusammenhang, insbesondere zeitgleich, mit dem Erfassen des vierten Bildes (52') ein Messen einer vierten Entfernung (14') zu dem zweiten Zielpunkt (10') oder zu einem anderen Zielpunkt (11') in unmittelbarer Umgebung des zweiten Zielpunktes (10'),
wobei das dritte Bild (51') und das vierte Bild (52') einen gemeinsamen Bildbereich (56') aufweisen, und die Bilderfassungseinheit (40) beim Erfassen des dritten Bildes (51') und des vierten Bildes (52') unterschiedliche Posen (93, 94) einnimmt, die die jeweilige Position und Ausrichtung des Entfernungsmessgerätes (1) repräsentieren, und im Rahmen des Verfahrens
• Merkmale in der Umgebung (3) identifiziert werden, die in dem gemeinsamen Bildbereich (56') abgebildet sind,
• basierend auf den identifizierten Merkmalen, der dritten Entfernung (13') und der vierten Entfernung (14') eine räumliche Beziehung (98') zwischen den Posen (93, 94) ermittelt wird, insbesondere eine Stereobasis,
• basierend auf dem dritten Bild (51'), dem vierten Bild (52') und der räumlichen Beziehung (98') ein zweites Teil-Raummodell (30b) der Umgebung (3) erstellt wird, und
• ein Gesamt-Raummodell (30) aus dem ersten Teil-Raummodell (30a) und dem zweiten Teil-Raummodell (30b), die einen gemeinsamen Überschnitt (33) haben, zusammengesetzt wird, wobei Entfernungen zwischen Raumpunkten (31) beider Bereiche der Umgebung anhand des Raummodells (30) ermittelbar sind.

12. Verfahren (100) nach Anspruch 10 oder Anspruch 11,
**dadurch gekennzeichnet, dass**
das Raummodell (30) eine Vielzahl mittels Merkmalsextraktion gewonnener Raumkoordinaten, insbesondere eine Punktwolke, sowie Bilddaten der von Bilderfassungseinheit (40) aufgenommenen Bilder (51, 52) aufweist.

13. Verfahren (100) nach einem der Ansprüche 10 bis 12,
**dadurch gekennzeichnet, dass**
zum Ermitteln der räumlichen Beziehung (98)
• Entfernungen zu einer Vielzahl von Punkten in dem ersten Bereich, die durch eine Vielzahl von Laserentfernungsmessern (20) des Entfernungsmessgerätes (1) gemessen werden, herangezogen werden, und/oder
• Beschleunigungs- bzw. Lagedaten, die durch einen Beschleunigungs- und/oder Lagesensor (26) des Entfernungsmessgerätes (1) bereitgestellt werden, herangezogen werden, insbesondere wobei der Beschleunigungs- und/oder Lagesensor (26) ein Gyroskop, einen Neigungssensor oder einen Kompass umfasst.

14. Computerprogrammprodukt mit Programmcode, der auf einem maschinenlesbaren Träger gespeichert ist, insbesondere auf einer als Steuerungseinheit (27) des Entfernungsmessgeräts (1) nach einem der Ansprüche 1 bis 9 ausgebildeten elektronischen Datenverarbeitungseinheit, zur Ausführung mindestens der folgenden Schritte des Verfahrens (100) nach einem der Ansprüche 10 bis 13:
• Identifizieren von Merkmalen in der Umgebung (3), die in dem gemeinsamen Bildbereich (56) abgebildet sind,
• Ermitteln einer räumlichen Beziehung (98) zwischen den Posen (91, 92), insbesondere einer Stereobasis, basierend auf den identifizierten Merkmalen, der ersten Entfernung (13) und der zweiten Entfernung (14), und
• Erstellen eines dreidimensionalen Raummodells (30) der Umgebung (3), basierend auf dem ersten Bild (51), dem zweiten Bild (52) und der räumlichen Beziehung (98),
• Anzeigen des Raummodells (30) auf einer Anzeigevorrichtung (23) des Entfernungsmessgerätes (1),
• Ermitteln einer Entfernung zwischen zwei mittels einer Eingabevorrichtung (24) durch einen Benutzer ausgewählten Raumpunkten (31), und
• Anzeigen der Entfernung auf der Anzeigevorrichtung (23).

## Claims

1. Handheld distance measuring device (1) having
- a laser distance meter (20) for measuring distances (13, 14) to target points (10, 11) in an environment (3) by emitting a laser beam in an emission direction, wherein the laser distance meter (20) comprises, on a front side of the distance measuring device (1) a laser emission unit (21) and a laser receiving unit (22),
- an analysis component (25) for deriving and providing the measured distances (13, 14),
- an image acquisition unit (40) having at least one camera (41-45) for acquiring images (51, 52) of the environment (3),
- a display device (23) and
- a control unit (27) having program code for controlling a spatial modeling functionality of the distance measuring device (1), which is implemented for use with a measurement sequence, in the scope of which a first image (51) and a second image (52) of a region of the environment are acquired from different positions of the distance measuring device (1), these images having a shared image region (56), wherein the image acquisition unit (40) assumes different poses (91, 92) during the acquisition of the first image (51) and the second image (52), which poses represent the respective position and alignment of the distance measuring device (1),
wherein the image acquisition unit (40) comprises at least a first camera (41) and a second camera (42) and is configured to
- acquire images (51, 52) in the direction of the emission direction of the laser distance meter (20), and
- acquire images (51, 52) with the first camera (41) and the second camera (42) simultaneously, wherein in the scope of the spatial modeling functionality
- in reaction to a first user command (101), from a first position of the distance measuring device (1)
- a first image (51) of a first region of the environment (3) is acquired by the image acquisition unit (40), and
- a first distance (13) to a first target point (10) in the first region is measured by the laser distance meter (20) in chronological correlation, in particular simultaneously, with the acquisition of the first image (51), and
- in reaction to a second user command (102), from a second position of the distance measuring device (1)
- a second image (52) of the first region of the environment (3) is acquired by the image acquisition unit (40), and
- a second distance (14) to the first target point (10) or to a second target point (11) in the immediate environment of the first target point (10) is measured by the laser distance meter (20) in chronological correlation, in particular simultaneously, with the acquisition of the second image (52),
wherein each of the first image (51) and the second image (52) are wide-angle images assembled from individual images of at least the first camera (41) and the second camera (42), and wherein the control unit (27), in the scope of the spatial modeling functionality, is configured
- to identify features of the environment (3) in the images (51, 52), which are imaged in the shared image region (56),
- to ascertain, based on the identified features, the first distance (13), and the second distance (14), a spatial relationship (98) between the poses (91, 92), in particular including a stereo base, and
- to prepare, based on the first image (51), the second image (52) and the spatial relationship (98), a spatial model (30) of the environment (3) by means of stereo photogrammetry, wherein distances between spatial points in the environment (3) can be ascertained on the basis of the spatial model (30),
wherein
- the display device (23) is configured for displaying the spatial model (30) and spatial points (31),
- the distance measuring device (1) comprises an input device (24) for selecting spatial points in the spatial model (30) by way of a user, in particular wherein the display device and the input device are embodied as a touchscreen (28),
- wherein the control unit (27) is configured to ascertain a distance between the selected spatial points (31) and
- the display device (23) is configured to display the ascertained distance.

2. Handheld distance measuring device (1) according to claim 1,
**characterized in that**
the first camera (41) is positioned on a first side and the second camera is positioned on a second side of the laser emission unit (21) and the laser receiving unit (22).

3. Handheld distance measuring device (1) according to claim 1,
**characterized in that**
the image acquisition unit (40) comprises at least three cameras (41-44) and is configured to acquire images (51, 52) of the surrounding (3) with the at least three cameras (41-44) simultaneously.

4. Handheld distance measuring device (1) according to any one of the preceding claims,
**characterized in that**
in the scope of the spatial modeling functionality, the image acquisition unit (40) is configured to acquire images continuously, wherein the distance measuring device (1) is configured to ascertain, based on the continuously acquired images, whether a present second position and alignment of the device (1) is suitable for executing the spatial modeling functionality.

5. Handheld distance measuring device (1) according to any one of the preceding claims,
**characterized in that**
the angle range acquired by the images (51, 52) comprises at least 120°, at least 150° or at least 180°, in particular wherein the image acquisition unit (40) comprises a multitude of cameras (41-45), and/or the cameras (41-45)
- are arranged in the form of a hemisphere,
- are equipped with monochromatic image sensors,
- are embodied as wafer-level cameras, and/or
- are embodied with backside illumination.

6. Handheld distance measuring device (1) according to any one of the preceding claims,
**characterized in that**
the distance measuring device (1) comprises a target search camera for capturing images in the direction of the emission direction, and the display screen, is configured to display a live image recorded by the target search camera.

7. Handheld distance measuring device (1) according to any one of the preceding claims,
**characterized in that**
- the spatial model (30) has a plurality of spatial coordinates obtained by means of feature extraction, in particular a point cloud, and also image data of the images (51, 52) recorded by the image acquisition unit (40), and/or
- the control unit (27) configured, in the scope of the spatial modeling functionality, to join together a first partial spatial model (30a) and a second partial spatial model (30b), which have a shared overlap (33), to form an overall spatial model (30), wherein distances between spatial points (31) of both regions of the environment can be ascertained on the basis of the spatial model (30), and/or
- the distance measuring device comprises means for wireless data transmission (29), wherein
- the spatial model (30) is transmittable by means of the wireless data transmission (29) from the distance measuring device (1) to at least one external device (2), and/or
- by means of the wireless data transmission (29), data are transmittable from the distance measuring device (1) to at least one external device (2), wherein the data have in particular at least coordinates of spatial points (31) and/or image and distance data, and the spatial model (30) can be prepared by a computing unit of the external device (2) based on the data.

8. Handheld distance measuring device (1) according to any one of the preceding claims,
**characterized in that**
- the at least one camera (41-45) of the image acquisition unit (40) is embodied for recording high-contrast images, and
- the control unit (27) is configured to identify features in the high-contrast images in the scope of the spatial modeling functionality.

9. Handheld distance measuring device (1) according to any one of the preceding claims,
**characterized by**
- a plurality of laser distance meters (20) for measuring distances to a plurality of points in the first region, wherein the control unit (27) is embodied for the purpose of using the distances to the plurality of points for ascertaining the spatial relationship (98), and/or
- an acceleration and/or location sensor (26), in particular having a gyroscope, an inclination sensor, or a compass, for providing acceleration or location data of the distance measuring device (1), wherein the control unit (27) is embodied for the purpose of using the acceleration or location data for ascertaining the spatial relationship (98).

10. Method (100) for creating a spatial model (30) of an environment (3) by means of a handheld distance measuring device (1), which has a laser distance meter (20) and an image acquisition unit (40) with at least a first camera (41) and a second camera (42), comprising a measurement sequence having
- an acquisition of a first image (51) of a first region of the environment (3) simultaneously by the first camera (41) and the second camera (42) from a first position of the distance measuring device (1),
- in chronological correlation, in particular simultaneously, with the acquisition of the first image (51), a measurement of a first distance (13) to a first target point (10) in the first region of the environment (3) by the laser distance meter (20),
- an acquisition of a second image (52) of the first region of the environment (3) simultaneously by the first camera (41) and the second camera (42) from a second position, which deviates from the first position of the distance measuring device (1), and
- in chronological correlation, in particular simultaneously, with the acquisition of the second image (52), a measurement of a second distance (14) to the first target point (10) or to another target point (11) in the immediate environment of the first target point (10),
wherein each of the first image (51) and the second image (52) are wide-angle images assembled from individual images of at least the first camera (41) and the second camera (42) and have a shared image region (56), and the image acquisition unit (40) assumes different poses (91, 92), which represent the respective position and alignment of the distance measuring device (1), during the acquisition of the first image (51) and the second image (52), and wherein, in the scope of the method,
- features of the environment (3), which are imaged in the shared image region (56), are identified in the images (51, 52),
- based on the identified features, the first distance (13), and the second distance (14), a spatial relationship (98) between the poses (91, 92) is ascertained, in particular including a stereo base,
- based on the first image (51), the second image (52), and the spatial relationship (98), a spatial model (30) of the environment (3) is prepared by means of stereo photogrammetry, wherein distances between spatial points (31) of the environment can be ascertained on the basis of the spatial model (30),
- the spatial model (30) is displayed on a display device (23) of the distance measuring device (1), and
- a distance between two spatial points (31) that are selected by a user by means of an input device is ascertained by a control unit (27) of the distance measuring device (1) and displayed on the display device (23), in particular wherein the distance measuring device (1) comprises a touchscreen (28) incorporatimg the display device and the input device.

11. Method (100) according to claim 10, wherein the prepared spatial model is a first partial spatial model (30a),
**characterized in that**
the measurement sequence additionally comprises
- an acquisition of a third image (51') of a second region of the environment (3) by the image acquisition unit (40) from a third position of the distance measuring device (1),
- in chronological correlation, in particular simultaneously, with the acquisition of the third image (51'), a measurement of a third distance (13') to a second target point (10') in the second region of the environment (3) by the laser distance meter (20),
- an acquisition of a fourth image (52') of the second region of the environment (3) by the image acquisition unit (40) from a fourth position, which deviates from the third position of the distance measuring device (1), and
- in chronological correlation, in particular simultaneously, with the acquisition of the fourth image (52'), a measurement of a fourth distance (14') to the second target point (10') or to another target point (11') in the immediate environment of the second target point (10'),
wherein the third image (51') and the fourth image (52') have a shared image region (56'), and the image acquisition unit (40) assumes different poses (93, 94) during the acquisition of the third image (51') and the fourth image (52'), which poses represent the respective position and alignment of the distance measuring device (1), and, in the scope of the method,
- features in the environment (3), which are imaged in the shared image region (56'), are identified,
- based on the identified features, the third distance (13'), and the fourth distance (14'), a spatial relationship (98') between the poses (93, 94) is ascertained, in particular a stereo base,
- based on the third image (51'), the fourth image (52'), and the spatial relationship (98'), a second partial spatial model (30b) of the environment (3) is prepared, and
- an overall spatial model (30) is assembled from the first partial spatial model (30a) and the second partial spatial model (30b), which have a shared overlap (33), wherein distances between spatial points (31) of both regions of the environment can be ascertained on the basis of the spatial model (30).

12. Method (100) according to claim 10 or claim 11,
**characterized in that**
the spatial model (30) has a plurality of spatial coordinates obtained by means of feature extraction, in particular a point cloud, and also image data of the images (51, 52) recorded by the image acquisition unit (40).

13. Method (100) according to any one of claims 10 to 12,
**characterized in that**
to ascertain the spatial relationship (98),
- distances to a plurality of points in the first region, which are measured by a plurality of laser distance meters (20) of the distance measuring device (1), are used, and/or
- acceleration or location data, which are provided by an acceleration and/or location sensor (26) of the distance measuring device (1), are used, in particular wherein the acceleration and/or location sensor (26) comprises a gyroscope, an inclination sensor, or a compass.

14. Computer program product having program code which is stored on a machine-readable carrier, in particular on an electronic data processing unit implemented as a control unit (27) of the distance measuring device (1) according to one of Claims 1 to 9, for executing at least the following steps of the method (100) according to one of Claims 10 to 13:
- identifying features in the environment (3), which are imaged in the shared image region (56),
- ascertaining a spatial relationship (98) between the poses (91, 92), in particular a stereo base, based on the identified features, the first distance (13), and the second distance (14), and
- preparing a spatial model (30) of the environment (3), based on the first image (51), the second image (52), and the spatial relationship (98),
- displaying the spatial model (30) on a display device (23) of the distance measuring device (1),
- ascertain a distance between two spatial points (31) that are selected by a user by means of an input device, and
- displaying the distance on the display device (23).

## Revendications

1. Appareil de mesure de distance portatif (1) comportant
• un télémètre laser (20) pour mesurer des distances (13, 14) à des points cibles (10, 11) dans un environnement (3) par émission d'un faisceau laser dans une direction d'émission, le télémètre laser (20) présentant une unité d'émission laser (21) et une unité de réception laser (22) sur une face avant du télémètre (1),
• un composant d'évaluation (25) pour dériver et fournir les distances mesurées (13, 14),
• une unité d'acquisition d'images (40) pour acquérir des images (51, 52) de l'environnement (3),
• un dispositif d'affichage (23) et
• une unité de commande (27) avec un code de programme pour commander une fonctionnalité de modélisation spatiale de l'appareil de mesure de distance (1), laquelle est conçue pour être utilisée avec une séquence de mesure dans le cadre de laquelle une première image (51) et une deuxième image (52) d'une zone de l'environnement sont acquises depuis différentes positions de l'appareil de mesure de distance (1), lesquelles présentent une zone d'image commune (56), l'unité d'acquisition d'images (40) adoptant différentes poses (91, 92) qui représentent la position et l'orientation respectives de l'appareil de mesure de distance (1) lors de l'acquisition de la première image (51) et de la deuxième image (52),
dans lequel
l'unité d'acquisition d'images (40) présente au moins une première caméra (41) et une deuxième caméra (42) et est conçue pour
• acquérir des images (51, 52) dans la direction d'émission du télémètre laser (20) et
• acquérir des images (51, 52) simultanément avec la première caméra (41) et la deuxième caméra (42)
dans lequel, dans le cadre de la fonction modélisation spatiale,
• en réaction à un premier ordre d'utilisateur (101), à partir d'une première position de l'appareil de mesure de distance (1),
▪ une première image (51) d'une première zone de l'environnement (3) est acquise par l'unité d'acquisition d'images (40) et
▪ une première distance (13) à un premier point cible (10) dans la première zone est mesurée par le télémètre laser (20) en relation temporelle avec l'acquisition de la première image (51), en particulier en même temps qu'elle, et
• en réaction à un deuxième ordre d'utilisateur (102), à partir d'une deuxième position de l'appareil de mesure de distance (1),
▪ une deuxième image (52) de la première zone de l'environnement (3) est acquise par l'unité d'acquisition d'images (40) et
▪ une deuxième distance (14) au premier point cible (10) ou à un deuxième point cible (11) dans l'environnement immédiat du premier point cible (10) est mesurée par le télémètre laser (20) en relation temporelle avec l'acquisition de la deuxième image (52), en particulier en même temps qu'elle,
dans lequel la première image (51) et la deuxième image (52) sont chacune des images grand angle constituées d'images individuelles provenant au moins de la première caméra (41) et de la deuxième caméra (42), et dans lequel l'unité de commande (27) est conçue, dans le cadre de la fonctionnalité de modélisation spatiale, pour
• identifier dans les images (51, 52) des caractéristiques de l'environnement (3) qui sont reproduites dans la zone d'image commune (56),
• sur la base des caractéristiques identifiées, de la première distance (13) et de la deuxième distance (14), déterminer une relation spatiale (98) entre les poses (91, 92), y compris en particulier une base stéréoscopique, et
• sur la base de la première image (51), de la deuxième image (52) et de la relation spatiale (98), créer par stéréophotogrammétrie un modèle spatial tridimensionnel (30) de l'environnement (3), des distances entre des points spatiaux de l'environnement (3) pouvant être déterminées à l'aide du modèle spatial (30),
dans lequel
• le dispositif d'affichage (23) est conçu pour afficher le modèle spatial (30) et les points spatiaux (31),
• l'appareil de mesure de distance (1) présente un dispositif d'entrée (24) pour la sélection de points spatiaux dans le modèle spatial (30) par un utilisateur, le dispositif d'affichage et le dispositif d'entrée étant en particulier réalisés sous la forme d'un écran tactile (28),
• l'unité de commande (27) est conçue pour déterminer une distance entre les points spatiaux sélectionnés (31) et
• le dispositif d'affichage (23) est conçu pour afficher la distance déterminée.

2. Appareil de mesure de distance portatif (1) selon la revendication 1,
**caractérisé en ce que**
la première caméra (41) est disposée sur un premier côté et la deuxième caméra (42) est disposée sur un deuxième côté de l'unité d'émission laser (21) et de l'unité de réception laser (22).

3. Appareil de mesure de distance portatif (1) selon la revendication 1,
**caractérisé en ce que**
l'unité d'acquisition d'images (40) présente au moins trois caméras (41-44) et est conçue pour acquérir des images (51, 52) de l'environnement (3) en même temps avec lesdites au moins trois caméras (41-44).

4. Appareil de mesure de distance portatif (1) selon l'une des revendications précédentes,
**caractérisé en ce que**
l'unité d'acquisition d'images (40) est conçue pour capturer en continu des images dans le cadre de la fonctionnalité de modélisation spatiale, l'appareil de mesure de distance (1) étant conçu pour déterminer, sur la base des images capturées en continu, si une deuxième position et orientation actuelles de l'appareil (1) est appropriée pour exécuter la fonctionnalité de modélisation spatiale.

5. Appareil de mesure de distance portatif (1) selon l'une des revendications précédentes,
**caractérisé en ce que**
la plage angulaire couverte par les images (51, 52) comprend au moins 120°, au moins 150° ou au moins 180°, en particulier dans lequel l'unité d'acquisition d'images (40) présente une pluralité de caméras (41-45) et/ou les caméras (41-45)
• sont disposées sous la forme d'une demi-sphère,
• sont équipées de capteurs d'images monochromes,
• sont réalisées sous la forme de caméras au niveau plaquette et/ou
• sont réalisées avec éclairage par l'arrière.

6. Appareil de mesure de distance portatif (1) selon l'une des revendications précédentes,
**caractérisé en ce que**
l'appareil de mesure de distance (1) présente une caméra de recherche de cible pour la capture d'images dans la direction d'émission et le dispositif d'affichage (23) est conçu pour afficher une image en direct de la caméra de recherche de cible.

7. Appareil de mesure de distance portatif (1) selon l'une des revendications précédentes,
**caractérisé en ce que**
• le modèle spatial (30) présente une pluralité de coordonnées spatiales obtenues par extraction de caractéristiques, en particulier un nuage de points, ainsi que des données d'image des images (51, 52) capturées par l'unité d'acquisition d'images (40) et/ou
• l'unité de commande (27) est conçue, dans le cadre de la fonctionnalité de modélisation spatiale, pour assembler un premier modèle spatial partiel (30a) et un deuxième modèle spatial partiel (30b), qui présentent une intersection commune (33), en un modèle spatial total (30), des distances entre des points spatiaux (31) des deux zones de l'environnement pouvant être déterminées à l'aide du modèle spatial (30) et/ou
• l'appareil de mesure de distance présente des moyens pour la transmission de données sans fil (29),
▪ le modèle spatial (30) pouvant être transmis par l'appareil de mesure de distance (1) à au moins un appareil externe (2) au moyen de la transmission de données sans fil (29), et/ou
▪ des données pouvant être transmises par l'appareil de mesure de distance (1) à au moins un appareil externe (2) au moyen de la transmission de données sans fil (29), les données présentant en particulier au moins des coordonnées de points spatiaux (31) et/ou des données d'image et de distance, et le modèle spatial (30) pouvant être créé sur la base des données par une unité de calcul de l'appareil externe (2).

8. Appareil de mesure de distance portatif (1) selon l'une des revendications précédentes,
**caractérisé en ce que**
• la première caméra (41) et/ou la deuxième caméra (42) sont conçues pour capturer des images à fort contraste et
• l'unité de commande (27) est conçue, dans le cadre de la fonctionnalité de modélisation spatiale, pour identifier des caractéristiques dans les images à fort contraste.

9. Appareil de mesure de distance portatif (1) selon l'une des revendications précédentes,
**caractérisé par**
• une pluralité de télémètres laser (20) pour mesurer des distances à une pluralité de points dans la première zone, l'unité de commande (27) étant conçue pour utiliser les distances à la pluralité de points pour déterminer la relation spatiale (98) et/ou
• un capteur d'accélération et/ou de position (26), présentant en particulier un gyroscope, un capteur d'inclinaison ou un compas, pour fournir respectivement des données d'accélération et/ou de position de l'appareil de mesure de distance (1), l'unité de commande (27) étant conçue pour utiliser les données d'accélération et/ou de position pour déterminer la relation spatiale (98).

10. Procédé (100) pour générer un modèle spatial (30) d'un environnement (3) au moyen d'un appareil de mesure de distance portatif (1) qui présente un télémètre laser (20) et une unité d'acquisition d'images (40) avec au moins une première caméra (41) et une deuxième caméra (42), par une séquence de mesure présentant
• une acquisition d'une première image (51) d'une première zone de l'environnement (3) par l'unité d'acquisition d'images (40) avec la première caméra (41) et la deuxième caméra (42) en même temps à partir d'une première position de l'appareil de mesure de distance (1),
• en relation temporelle avec l'acquisition de la première image (51), en particulier en même temps qu'elle, une mesure d'une première distance (13) à un premier point cible (10) dans la première zone de l'environnement (3) par le télémètre laser (20),
• une acquisition d'une deuxième image (52) de la première zone de l'environnement (3) par l'unité d'acquisition d'images (40) avec la première caméra (41) et la deuxième caméra (42) en même temps à partir d'une deuxième position de l'appareil de mesure de distance (1) différente de la première position, et
• en relation temporelle avec l'acquisition de la deuxième image (52), en particulier en même temps qu'elle, une mesure d'une deuxième distance (14) au premier point cible (10) ou à un autre point cible (11) dans l'environnement immédiat du premier point cible (10),
dans lequel la première image (51) et la deuxième image (52) sont chacune des images grand angle constituées d'images individuelles provenant au moins de la première caméra (41) et de la deuxième caméra (42) et présentent une zone d'image commune (56), et l'unité d'acquisition d'images (40), lors de l'acquisition de la première image (51) et de la deuxième image (52), adopte différentes positions (91, 92) qui représentent la position et l'orientation respectives de l'appareil de mesure de distance (1) et, dans le cadre du procédé,
• des caractéristiques de l'environnement (3) qui sont reproduites dans la zone d'image commune (56) sont identifiées dans les images (51, 52),
• sur la base des caractéristiques identifiées, de la première distance (13) et de la deuxième distance (14), une relation spatiale (98) entre les poses (91, 92) est déterminée, y compris en particulier une base stéréoscopique,
• sur la base de la première image (51), de la deuxième image (52) et de la relation spatiale (98), un modèle spatial tridimensionnel (30) de l'environnement (3) est créé par stéréophotogrammétrie, des distances entre des points spatiaux de l'environnement (3) pouvant être déterminées à l'aide du modèle spatial (30),
• le modèle spatial (30) est affiché sur un dispositif d'affichage (23) de l'appareil de mesure de distance (1) et
• une distance entre deux points spatiaux (31) sélectionnés par un utilisateur au moyen d'un dispositif d'entrée (24) est déterminée par une unité de commande (27) de l'appareil de mesure de distance (1) et affichée sur le dispositif d'affichage (23), l'appareil de mesure de distance (1) présentant en particulier un écran tactile (28) qui comprend le dispositif d'affichage et le dispositif d'entrée.

11. Procédé (100) selon la revendication 10, dans lequel le modèle spatial créé est un premier modèle spatial partiel (30a),
**caractérisé en ce que** la séquence de mesure présente en outre
• une acquisition d'une troisième image (51') d'une deuxième zone de l'environnement (3) par l'unité d'acquisition d'images (40) à partir d'une troisième position de l'appareil de mesure de distance (1),
• en relation temporelle avec l'acquisition de la troisième image (51'), en particulier en même temps qu'elle, une mesure d'une troisième distance (13') à un deuxième point cible (10') dans la deuxième zone de l'environnement (3) par le télémètre laser (20),
• une acquisition d'une quatrième image (52') de la deuxième zone de l'environnement (3) par l'unité d'acquisition d'images (40) à partir d'une quatrième position de l'appareil de mesure de distance (1) différente de la troisième position et
• en liaison temporelle avec l'acquisition de la quatrième image (52'), en particulier en même temps qu'elle, une mesure d'une quatrième distance (14') au deuxième point cible (10') ou à un autre point cible (11') dans l'environnement immédiat du deuxième point cible (10'),
dans lequel la troisième image (51') et la quatrième image (52') présentent une zone d'image commune (56') et l'unité d'acquisition d'images (40), lors de l'acquisition de la troisième image (51') et de la quatrième image (52'), adopte différentes poses (93, 94) qui représentent la position et l'orientation respectives de l'appareil de mesure de distance (1) et, dans le cadre du procédé,
• des caractéristiques de l'environnement (3) qui sont reproduites dans la zone d'image commune (56') sont identifiées,
• sur la base des caractéristiques identifiées, de la troisième distance (13') et de la quatrième distance (14'), une relation spatiale (98') entre les poses (93, 94) est déterminée, en particulier une base stéréoscopique,
• sur la base de la troisième image (51'), de la quatrième image (52') et de la relation spatiale (98'), un deuxième modèle spatial partiel (30b) de l'environnement (3) est créé et
• un modèle spatial total (30) est assemblé à partir du premier modèle spatial partiel (30a) et du deuxième modèle spatial partiel (30b) qui présentent une intersection commune (33), des distances entre des points spatiaux (31) des deux zones de l'environnement pouvant être déterminées à l'aide du modèle spatial (30).

12. Procédé (100) selon la revendication 10 ou la revendication 11,
**caractérisé en ce que**
le modèle spatial (30) présente une pluralité de coordonnées spatiales obtenues par extraction de caractéristiques, en particulier un nuage de points, ainsi que des données d'image des images (51, 52) capturées par l'unité d'acquisition d'images (40).

13. Procédé (100) selon l'une des revendications 10 à 12,
**caractérisé en ce que**,
pour déterminer la relation spatiale (98),
• des distances à une pluralité de points dans la première zone, qui sont mesurées par une pluralité de télémètres laser (20) de l'appareil de mesure de distance (1), sont utilisées et/ou
• des données d'accélération et/ou de position qui sont fournies par un capteur d'accélération et/ou de position (26) de l'appareil de mesure de distance (1) sont utilisées, le capteur d'accélération et/ou de position (26) comprenant en particulier un gyroscope, un capteur d'inclinaison ou un compas.

14. Produit programme d'ordinateur avec un code de programme qui est stocké sur un support lisible par machine, en particulier sur une unité électronique de traitement de données réalisée sous la forme d'une unité de commande (27) de l'appareil de mesure de distance (1) selon l'une des revendications 1 à 9, pour exécuter au moins les étapes suivantes du procédé (100) selon l'une des revendications. 10 à 13 :
• identification de caractéristiques de l'environnement (3) qui sont reproduites dans la zone d'image commune (56),
• détermination d'une relation spatiale (98) entre les poses (91, 92), en particulier d'une base stéréoscopique, sur la base des caractéristiques identifiées, de la première distance (13) et de la deuxième distance (14) et
• création d'un modèle spatial tridimensionnel (30) de l'environnement (3), sur la base de la première image (51), de la deuxième image (52) et de la relation spatiale (98),
• affichage du modèle spatial (30) sur un dispositif d'affichage (23) de l'appareil de mesure de distance (1),
• détermination d'une distance entre deux points spatiaux (31) sélectionnés par un utilisateur au moyen d'un dispositif d'entrée (24) et
• affichage de la distance sur le dispositif d'affichage (23).
